# EUROPEAN PATENT APPLICATION

(11) **EP 4 716 203 A1**
(43) Date of publication of application: **25.03.2026**
(21) Application number: 25197079.4
(22) Date of filing: 20.08.2025
(51) Int. Cl.: H04N 1/00, G06F 3/12, G06F 11/34

(54) **IMAGE-PROCESSING DEVICE**

(30) Priority: 19.09.2024 JP 2024161962
(71) Applicant: Brother Kogyo Kabushiki Kaisha, Nagoya, Aichi 467-8561 (JP)
(72) Inventor: SHIMADU, Koji, Nagoya, 467-8562 (JP)
(74) Representative: J A Kemp LLP

(57) **Abstract**

An image-processing device includes: a network interface; a user interface; and a controller. The image-processing device has a server logging function to store a log on a server connected to the image-processing device via the network interface. The controller is configured to perform: a log transmission process; and a warning process. The log transmission process is performed when a first condition for storing a log is met while the server logging function is enabled. The log transmission process including: generating; and transmitting. The generating included in the log transmission process generates a log. The transmitting included in the log transmission process transmits, to the server, the log generated by the generating included in the log transmission process via the network interface. The warning process includes issuing. The issuing included in the warning process issues a warning related to the server logging function via the user interface.

## Description

The technical field disclosed in the present specification relates to an image-processing device having a function to store logs in a designated storage location.

A known image-processing device has a function to generate logs when a predetermined operation is performed or predetermined settings are changed, and to store these logs in a designated storage location. For example, Japanese Patent Application Publication No. 2020-135131 is a document on such logging technologies describing a communication device that stores logs of changes made to communication settings on a server. When the communication device receives a request to store second communication settings while first communication settings are already stored on the communication device, the communication device transmits a log indicating the acceptance of this request to the server. The communication device then stores the second communication settings when the server receives this log and does not store the second communication settings when the server does not receive the log.

However, known image-processing devices having such a function to store logs may be unable to store logs despite the function being enabled due to the user inadvertently performing an operation that changes a setting related to the function or due to changes in the communication environment. Therefore, it is desirable to avoid situations in which logs cannot be stored unintentionally.
(1) In order to attain the above and other objects, according to aspect (1), the present disclosure provides an image-processing device. The image-processing device includes: a network interface; a user interface; and a controller. The image-processing device has a server logging function to store a log on a server connected to the image-processing device via the network interface. The controller is configured to perform: a log transmission process; and a warning process. The log transmission process is performed when a first condition for storing a log is met while the server logging function is enabled. The log transmission process includes: generating; and transmitting. The generating included in the log transmission process generates a log. The transmitting included in the log transmission process transmits, to the server, the log generated by the generating included in the log transmission process via the network interface. The warning process includes: issuing. The issuing included in the warning process issues a warning related to the server logging function via the user interface.

The image-processing device according to aspect (1) issues a warning related to a server logging function, thereby avoiding situations in which logs can no longer be stored due to a user inadvertently performing a setting change operation that changes a setting, for example.
(2) According to aspect (2), in the image-processing device of aspect (1), it is preferable that: in response to a setting change operation being received via the user interface while the server logging function is enabled, the warning process is performed and the warning indicates that changing a setting related to the network interface is to affect the server logging function; and the setting change operation instructs to change the setting related to the network interface.
(3) According to aspect (3), in the image processing device of aspect (2), it is preferable that: the warning process further includes: receiving. The receiving included in the warning process receives a cancellation operation via the user interface. The cancellation operation instructs to cancel the setting change operation that has been received. It is also preferable that: the controller is configured to further perform: a cancellation process. The cancellation process is performed in response to the warning process receiving the cancellation operation. The cancellation process includes: cancelling. The cancelling included in the cancellation process cancels the received setting change operation.
(4) According to aspect (4), in the image-processing device of aspect (1), it is preferable that: the controller is configured to further perform: a network determination process; and the network determination process includes: determining. The determining included in the network determination process determines whether the image-processing device is connected to a network via the network interface. It is also preferable that: in response to the network determination process determining that the image-processing device is not connected to the network while the server logging function is enabled, the warning process is performed and the warning indicates that the image-processing device is not connected to the network.
(5) According to aspect (5), in the image-processing device of aspect (4), it is preferable that: the controller is configured to further perform: a server determination process. The server determination process is performed in response to the network determination process determining that the image-processing device is connected to the network. The server determination process includes: determining. The determining included in the server determination process determines whether the server is accessible. It is also preferable that: in response to the server determination process determining that the server is not accessible while the server logging function is enabled, the warning process is performed and the waning indicates that the server is not accessible.
(6) According to aspect (6), in the image-processing device of aspect (1), it is preferable that: a removable portable memory device is mountable in the image-processing device; and the image-processing device further has a memory logging function to store a log in the memory device mounted in the image-processing device. It is also preferable that the controller is configured to further perform: a log storage process. The log storage process is performed when a second condition for storing a log is met while the memory logging function is enabled. The log storage process includes: generating; and storing. The generating included in the log storage process generates a log. The storing included in the log storage process stores, in the mounted memory device, the log generated by the generating included in the log storage process. It is also preferable that: in response to detection that no memory device is mounted in the image-processing device while the memory logging function is enabled, the warning process is performed and the warning indicates that no memory device is mounted.
(7) According to aspect (7), in the image-processing device of aspect (6), it is preferable that: the controller is configured to further perform: a write determination process. The write determination process is performed when the memory device is mounted in the image-processing device. The write determination process includes: determining. The determining included in the write determination process determines whether the mounted memory device is writable. It is also preferable that: in response to the write determination process determining that the mounted memory device is not writable while the memory logging function is enabled, the warning process is performed and the warning indicates that the mounted memory device is not writable.
(8) According to aspect (8), in the image-processing device of aspect (1), it is preferable that: in response to an initialization operation being received via the user interface while the server logging function is enabled, the warning process is performed and the warning indicates that initialization is to affect the server logging function; and the initialization operation instructs to initialize a setting in the image-processing device.
(9) According to aspect (9), in the image-processing device of aspect (8), it is preferable that: the warning process further includes: receiving. The receiving included in the warning process receives a cancellation operation via the user interface. The cancellation operation instructs to cancel the initialization operation that has been received. It is also preferable that: the controller is configured to further perform: a cancellation process. The cancellation process is performed in response to the warning process receiving the cancellation operation. The cancellation process includes: cancelling. The cancelling included in the cancellation process cancels the received initialization operation.
(10) According to aspect (10), in the image-processing device of aspect (8), it is preferable that: while the server logging function is enabled: when the initialization operation that has been received is a first-type initialization operation, the warning process is performed; and when the initialization operation that has been received is a second-type initialization operation, the warning process is not performed. It is also preferable that: the first-type initialization operation instructs to initialize one or more settings including one or more of a plurality of specific settings in the image-processing device and the second-type initialization operation instructs to initialize one or more settings including none of the plurality of specific settings in the image-processing device; and each of the plurality of specific setting, when changed, affects the server logging function.
(11) According to aspect (11), in the image-processing device of aspect (10), it is preferable that: the warning indicates warning content corresponding to the one or more of the plurality of specific settings.
(12) According to aspect (12), in the image-processing device of aspect (11), it is preferable that: the warning content incudes an indication of how the server logging function is to be affected.
(13) According to aspect (13), in the image-processing device of aspect (8), it is preferable that: warning content indicated by the warning varies depending on whether a logged-in user logged in to the image-processing device has an administrative privilege.
(14) According to aspect (14), in the image-processing device of aspect (13), it is preferable that: the warning process further includes: receiving; permitting; and cancelling. The receiving included in the warning process receives, when the logged-in user does not have the administrative privilege, an input of a password for administrator authentication via the user interface. The permitting included in the warning process permits, in response to the administrator authentication being successful, initialization based on the initialization operation. The cancelling included in the warning process cancels, in response to the administrator authentication failing, the initialization operation.
(15) According to aspect (15), in the image-processing device of aspect (1), it is preferable that: the generating included in the log transmission process generates a log including information on a time. It is also preferable that: in response to a clock change operation being received via the user interface while the server logging function is enabled, the warning process is performed and the warning indicates that changing a setting related to a clock is to affect the server logging function; and the clock change operation instructs to change the setting related to the clock.
(16) According to aspect (16), in the image-processing device of aspect (15), it is preferable that: the controller is configured to further perform: a clock server determination process. The clock server determination process includes: determining. The determining included in the clock server determination process determines whether communication with a clock server via the network interface is possible. It is also preferable that: in response to the clock server determination process determining that the communication with the clock server is not possible while the server logging function is enabled, the warning process is performed and the warning indicates that the communication with the clock server is not possible.
(17) According to aspect (17), it is preferable that: the image-processing device of aspect (15) further includes: an internal clock; and the internal clock is powered by a battery. In the image-processing device of aspect (15), it is also preferable that: the controller is configured to further perform: a time obtaining process. The time obtaining process includes: attempting. The attempting included in the time obtaining process attempts to obtain a current time from the internal clock. It is also preferable that: in response to the time obtaining process failing to obtain a correct current time while the server logging function is enabled, the warning process is performed and the warning indicates that the correct current time cannot be obtained.
(18) According to aspect (18), in the image-processing device of aspect (1), it is preferable that: the generating included in the log transmission process generates a log including identification information for identifying the image-processing device. It is also preferable that: in response to an identification change operation being received via the user interface while the server logging function is enabled, the warning process is performed and the warning indicates that changing a setting related to the identification information is to affect the server logging function; and the identification change operation instructs to change the setting related to the identification information.
(19) According to aspect (19), in the image-processing device of aspect (18), it is preferable that: while the server logging function is enabled: when the identification change operation that has been received is a first-type identification change operation, the warning process is performed; and when the identification change operation that has been received is a second-type identification change operation, the warning process is not performed. It is also preferable that: the first-type identification change operation instructs to change first-type identification information and the second-type identification change operation instructs to change second-type identification information; and the log generated by the generating included in the log transmission process includes the first-type identification information and not includes the second-type identification information.

The image-processing device disclosed herein issues a warning when a state or operation affecting the server logging function occurs while the server logging function is enabled. Furthermore, the image-processing device issues a warning when no memory device is mounted while the memory logging function is enabled. Accordingly, situations in which logs cannot be stored can be prevented, and this facilitates the resolution of states in which logs cannot be stored.

A control method, a set of computer-readable instructions, and a computer-readable storage medium storing the set of computer-readable instructions for implementing the functions of the image-processing device having the configuration described above are also novel and useful.

The technology disclosed in this specification provides, in an image-processing device having a logging function, a technique for preventing the inability to store logs while the logging function is enabled.
FIG. 1 is a block diagram illustrating the electrical structure of a multifunction peripheral (MFP).
FIG. 2 is a flowchart illustrating an example of steps in a startup process.
FIG. 3 is a flowchart illustrating an example of steps in a storage location confirmation process.
FIG. 4A is an illustration of an example of a warning screen containing a warning related to a network.
FIG. 4B is an illustration of another example of the warning screen containing the warning related to the network.
FIG. 5A is an illustration of an example of a warning screen containing a warning related to a memory device.
FIG. 5B is an illustration of another example of the warning screen containing the warning related to a memory device.
FIG. 6A is an illustration of an example of a warning screen containing a warning related to a clock.
FIG. 6B is an illustration of another example of the warning screen containing the warning related to a clock.
FIG. 6C is an illustration of still another example of the warning screen containing the warning related to a clock.
FIG. 7A is an illustration of an example of a warning screen containing a message indicating that a logging function has been disabled.
FIG. 7B is an illustration of an example of a warning screen containing a message indicating that the logging function will be disabled.
FIG. 8A is an illustration of an example of a home screen.
FIG. 8B is an illustration of an example of a settings selection screen.
FIG. 9 is a flowchart illustrating an example of steps in a user operation response process.
FIG. 10 is a flowchart illustrating an example of steps in an initial settings process.
FIG. 11A is an illustration of an example of an initial settings selection screen.
FIG. 11B is an illustration of an example of a reset settings screen.
FIG. 11C is an illustration of an example of the correspondence between various setting resets and items to be initialized.
FIG. 12A is an illustration of an example of a warning screen containing a warning related to initialization.
FIG. 12B is an illustration of another example of the warning screen containing the warning related to initialization.
FIG. 13A is an illustration of still another example of the warning screen containing the warning related to initialization.
FIG. 13B is an illustration of still another example of the warning screen containing the warning related to initialization.
FIG. 14 is a flowchart illustrating an example of steps in a settings initialization process.
FIG. 15 is a flowchart illustrating an example of steps in a clock setting process.
FIG. 16A is an illustration of an example of a clock settings screen containing a clock settings menu.
FIG. 16B is an illustration of an example of a warning screen containing a warning related to clock settings.

Below, an embodiment of an image-processing device according to the present invention will be described while referring to the accompanying drawings. This specification describes a multifunction peripheral (hereinafter called "MFP") having a wireless communication function.

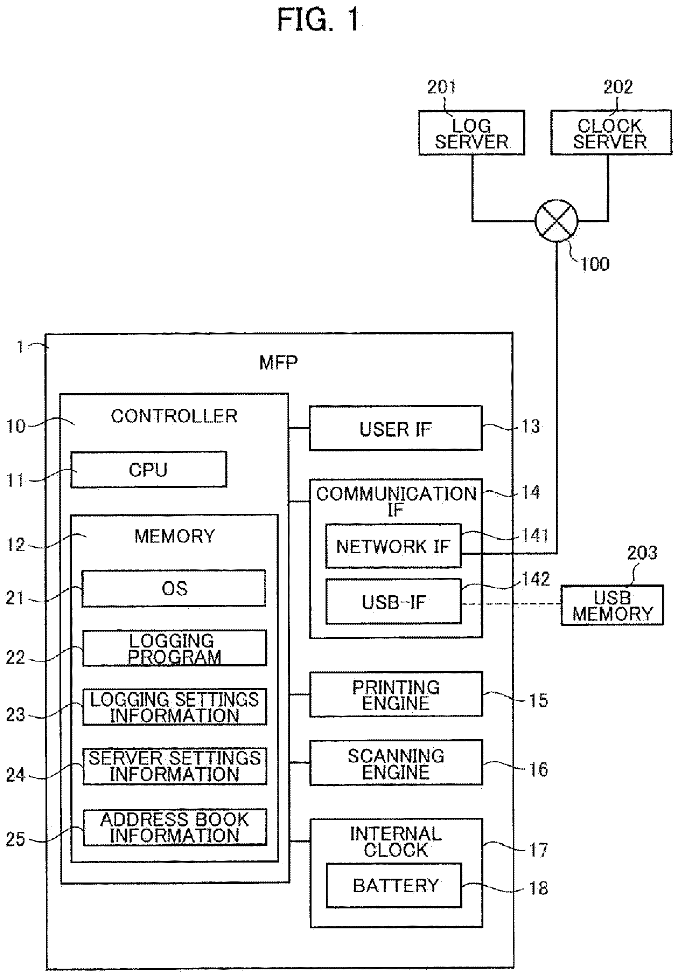

FIG. 1 illustrates an example of an MFP 1 according to the present embodiment. The MFP 1 includes a controller 10 that includes a CPU 11 and a memory 12. The MFP 1 also includes a user interface (also referred to as "user IF") 13, a communication interface (also referred to as "communication IF") 14, a printing engine 15, a scanning engine 16, and an internal clock 17, all of which are electrically connected to the controller 10.

The CPU 11 of the MFP 1 executes various processes according to programs read from the memory 12 or based on user operations. As illustrated in FIG. 1, the memory 12 stores various programs and data, including an operating system (hereinafter abbreviated as "OS") 21, a logging program 22, logging settings information 23, server settings information 24, and address book information 25. The memory 12 is also used as a work area when the CPU 11 executes various processes. A buffer provided in the CPU 11 is also an example of the memory 12. The programs and data will be described later in greater detail.

Examples of the memory 12 may include ROM, RAM, and a hard disk drive built into the MFP 1 or may be a storage medium that is readable and writable by the CPU 11. A Universal Serial Bus (hereinafter abbreviated as "USB") memory connected to the MFP 1, an external memory such as a hard disk drive, and a memory or hard disk drive provided in a device connected to the MFP 1 via the communication interface 14 are all examples of the memory 12.

A computer-readable storage medium is a non-transitory medium. In addition to the above examples, non-transitory media include storage media such as CD-ROM and DVD-ROM. A non-transitory medium is also a tangible medium. On the other hand, electric signals that convey programs downloaded from a server, for example, on the Internet are a computer-readable signal medium, which is one type of computer-readable medium but is not included in a non-transitory computer-readable storage medium.

The user interface 13 includes a touchscreen, for example. The touchscreen includes hardware that displays screens for reporting information to the user, and hardware that receives user operations. The user interface 13 may also include a combination of a display and hardware buttons, for example.

The communication interface 14 includes hardware for communicating with external devices. The communication interface 14 includes a network interface (also referred to as "network IF") 141 for connecting to a network 100, such as Wi-Fi (registered trademark) or Ethernet (registered trademark), and a USB interface (also referred to as "USB-IF") 142 conforming to the USB communication standard. "Wi-Fi" is a registered trademark of the Wi-Fi Alliance in the U.S.A. "Ethernet" is a registered trademark of FUJIFILM Business Innovation Corp. in Japan. The MFP 1 can also connect to a log server 201 and a clock server 202 via the network interface 141. The log server is an example of the server of the present disclosure. The MFP 1 can also connect to a USB memory 203 via the USB interface 142. The USB memory 203 is an example of a memory device of the present disclosure. The MFP 1 may further include communication interfaces 14 that support other communication standards.

The printing engine 15 includes configurations for printing images on sheets or other print media based on image data. The method of printing used by the printing engine 15 may be the electrophotographic method or the inkjet method, for example. The scanning engine 16 includes a configuration for scanning an image of a document to generate scan data.

The internal clock 17 is powered by a battery 18 provided in the MFP 1. Owing to the battery 18, the internal clock 17 can continue to operate even when the power supply to the MFP 1 is turned off.

Next, the operations of the MFP 1 will be described with reference to flowcharts. The following processes represent processes performed by the CPU 11 in accordance with instructions described in programs. In other words, processes in the following description using active verbs such as "determine," "extract," "select," "calculate," "set," "identify," "obtain," "receive," and "control" represent processes performed by the CPU 11. Processes performed by the CPU 11 include hardware control using an application programming interface (hereinafter abbreviated as "API") in the OS. However, this specification describes operations of each program while omitting the role of the OS. That is, a statement in the following description to the effect that "Program B controls Hardware C" may signify that "Program B controls Hardware C using the API of the OS." Furthermore, a process performed by the CPU 11 according to an instruction described in a program may be described using an abbreviated expression, such as "the CPU 11 executes." Similarly, a process performed by the CPU 11 according to an instruction described in a program may be described with a phrase that omits the CPU 11, such as "Program A executes."

Words such as "notify," "report," "inform," "reply," "respond," and "answer" in this specification are used not only to mean the conveyance of information to a person, but also to mean communication and information exchange between devices and between configurations within a device. The configurations within a device include software configurations.

Note that the term "obtain" is used as a concept that does not necessarily require a request. In other words, a process by which the CPU 11 receives data without requesting that data is included in the concept of "the CPU 11 obtains data." Furthermore, the term "data" described herein is expressed in bit strings that can be read by a computer. Data of different formats are treated as the same data when the content of the data is essentially the same. The same holds true for "information" in this specification. Further, the terms "requesting" and "instructing" are concepts that denote outputting information to another device indicating a request and an instruction, respectively. Furthermore, information indicating a request and information indicating an instruction will simply be described as a "request" and an "instruction," respectively.

Furthermore, a process performed by the CPU 11 to determine whether Information A indicates Circumstance B may be conceptually described as "determining whether Circumstance B applies based on Information A." Similarly, a process performed by the CPU 11 to determine whether Information A indicates Circumstance B or Circumstance C may be conceptually described as "determining whether Circumstance B or Circumstance C applies based on Information A."

In this specification, a setting item may simply be referred to as a "setting." Setting values may also be referred to simply as "settings." Setting values may also be described as "parameters." Furthermore, the process of storing a setting value in memory, for example, may be referred to simply as "setting." An operation for setting a setting value or the act of inputting a setting value may also simply be referred to as "setting."

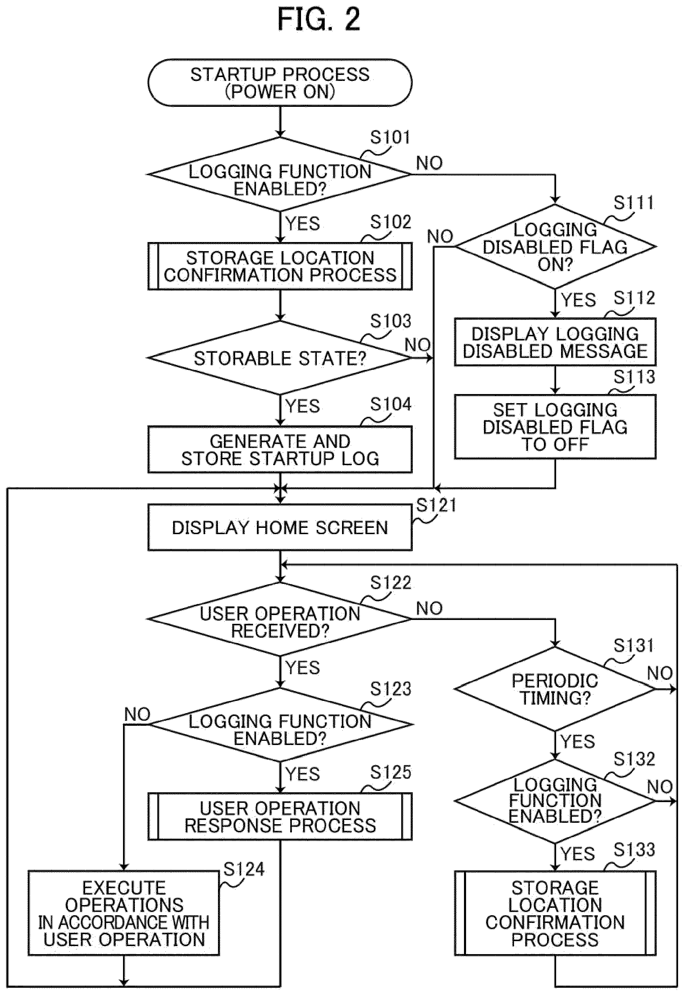

The MFP 1 executes a startup process in response to the power being turned on. Steps in the startup process will be described with reference to the flowchart illustrated in FIG. 2.

In S 101 of the startup process, the CPU 11 of the MFP 1 determines whether a logging function is enabled on the basis of the logging settings information 23 stored in the memory 12. The logging function stores information on operations as a log when an operation to be recorded (stored) is performed in accordance with a user operation, for example. Information to be recorded (stored) as a log includes information on the time of the operation, the node name, the execution type, supplementary information, and the execution results. The MFP 1 enables or disables the logging function in accordance with a user operation.

When the CPU 11 determines that the logging function is enabled (S101: YES), in S102 the CPU 11 executes a storage location confirmation process. With the logging function, the CPU 11 can receive a setting for the location in which the log is to be stored. The storage location for logs (log storage location) is the log server 201 or another server set as the log storage location, or the USB memory 203 or another portable memory device mounted in the MFP 1, for example. The logging function of the MFP 1 includes a server logging function for storing logs on a server, and a memory logging function for storing logs in a memory device. When the logging function is enabled, either the server logging function or the memory logging function is enabled. When the logging function is disabled, on the other hand, both the server logging function and the memory logging function are disabled.

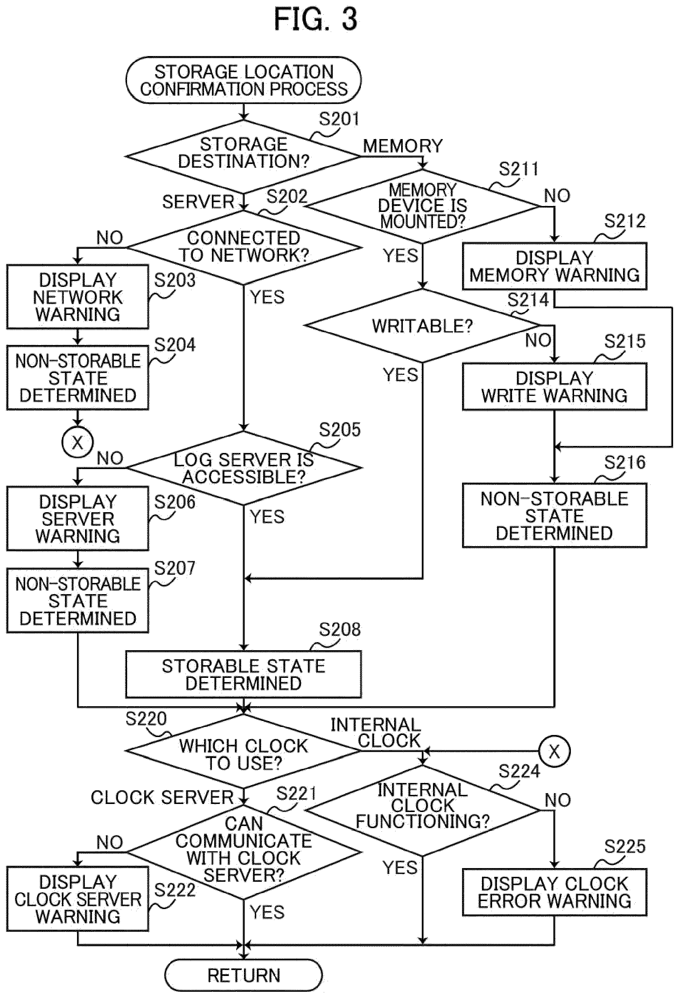

Steps in the storage location confirmation process will be described here with reference to the flowchart in FIG. 3. In S201 of FIG. 3, the CPU 11 determines whether the log storage location is a server or a memory device. When the CPU 11 determines that the log storage location is a server (S201: server), i.e., when the CPU 11 determines that the server logging function is enabled, in S202 the CPU 11 determines whether the MFP 1 is connected to the network 100 via the network interface 141. The process of S202 is an example of the network determination process of the present disclosure.

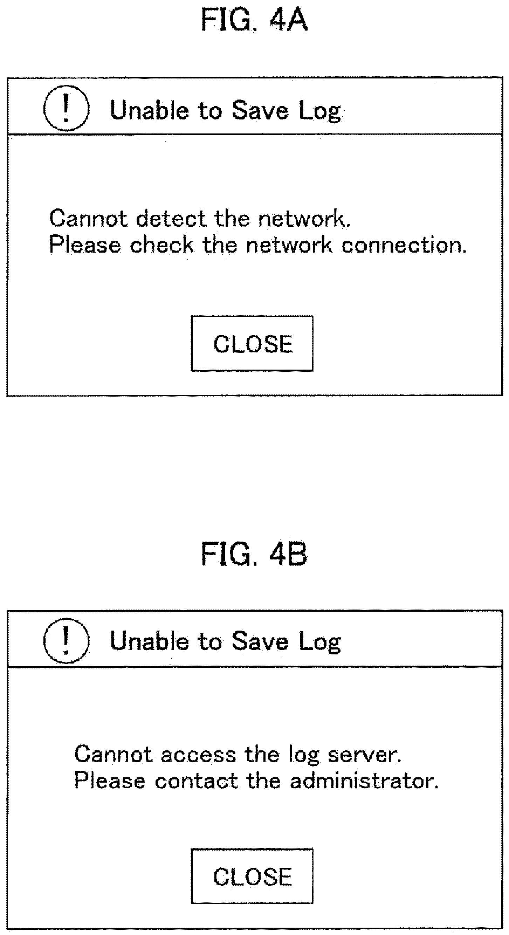

When the CPU 11 determines that the MFP 1 is not connected to the network 100 (S202: NO), in S203 the CPU 11 displays a network warning on the user interface 13. The process of S203 is an example of the warning process of the present disclosure. As illustrated in the example of FIG. 4A, the CPU 11 displays a warning indicating that the log cannot be stored and that the MFP 1 is not connected to a network, along with a message requesting the user to check the network status. In S204 the CPU 11 determines that the MFP 1 is in a non-storable state in which log storage is not possible, i.e., logging is not possible.

Since the MFP 1 cannot communicate with the log server 201 or other server specified as the log storage location when the MFP 1 is not connected to the network 100, the MFP 1 cannot store the log. By warning the user that the MFP 1 is not connected to a network, the MFP 1 can prompt corrective action when the user has inadvertently altered the communication environment. Examples of the communication environment being altered include the MFP 1 being moved outside the range of wireless communications, the power to the wireless repeater being turned off, or the LAN cable being unplugged. This corrective action can help prevent continuation of a non-storable state in which log storage (logging) is not possible.

When the CPU 11 determines that the MFP 1 is connected to the network 100 (S202: YES), in S205 the CPU 11 determines whether the log server 201 is accessible. The process of S205 is an example of the server determination process of the present disclosure. The log server 201 in this example is the server set as the log storage location on the MFP 1. For example, the CPU 11 uses the server settings information 24 stored in the memory 12 to attempt to access the log server 201 and determines whether the attempt is successful.

The CPU 11 determines that access to the log server 201 is not possible when no response has been received from the log server 201 or when a response has been received but access has been denied, for example. When the CPU 11 determines that the MFP 1 cannot access the log server 201 (S205: NO), in S206 the CPU 11 displays a server warning on the user interface 13. The process of S206 is an example of the warning process of the present disclosure. As illustrated in the example of FIG. 4B, the CPU 11 displays a warning indicating that the log cannot be stored and that the log server 201 cannot be accessed, along with a message requesting the user to contact the administrator. In S207 the CPU 11 determines that the MFP 1 is in a non-storable state in which log storage (logging) is not possible.

When the MFP 1 is unable to access the log server 201, the MFP 1 cannot store logs on the log server 201 even when the MFP 1 is connected to the network 100. By warning the user that the MFP 1 cannot access the log server 201, the MFP 1 can prompt corrective action when the user has inadvertently altered the communication environment. Examples of the communication environment being altered include the account for accessing the log server 201 or access privileges being changed. This corrective action can help prevent continuation of a non-storable state in which log storage (logging) is not possible.

However, when the CPU 11 determines that the log server 201 can be accessed (S205: YES), in S208 the CPU 11 determines that the MFP 1 is in a storable state in which log storage (logging) is possible.

On the other hand, when the CPU 11 determines in S201 that the log storage location is a memory device and not a server (S201: memory), i.e., when the CPU 11 determines that the memory logging function is enabled, in S211 the CPU 11 determines whether a USB memory is mounted in the MFP 1 as the log storage location. When the CPU 11 is capable of distinguishing individual USB memories, the CPU 11 may determine whether the memory device mounted in the MFP 1 is the USB memory 203 that has been set as the log storage location.

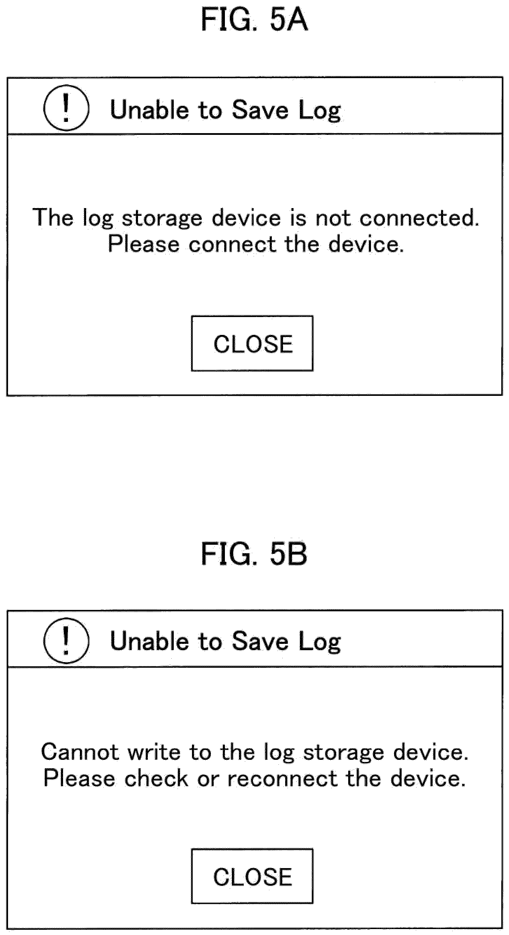

When the CPU 11 determines that the USB memory 203 is not mounted in the MFP 1 (S211: NO), in S212 the CPU 11 displays a memory warning on the user interface 13. The process of S212 is an example of the warning process of the present disclosure. As illustrated in the example of FIG. 5A, the CPU 11 displays a warning indicating that the log cannot be stored and no memory device is mounted in the MFP 1, along with a message requesting the user to mount the USB memory 203 therein.

Thus, the MFP 1 cannot store logs when the USB memory 203 is not mounted in the MFP 1 while the memory logging function is enabled. By warning the user that no memory device is mounted in the MFP 1, the CPU 11 can help avoid situations in which logs cannot be stored due to the user unintentionally removing the memory device, for example.

When the CPU 11 determines that the USB memory 203 is mounted in the MFP 1 (S211: YES), in S214 the CPU 11 determines whether this USB memory 203 is writable. The process of S214 is an example of the write determination process of the present disclosure. For example, the CPU 11 attempts to write a sample log to the USB memory 203 and then determines whether the writing is successful. When the writing is successful, the CPU 11 determines that the USB memory 203 is writable and deletes the sample log from the USB memory 203. However, when the CPU 11 fails to write the sample log to the USB memory 203 because the USB memory 203 has insufficient storage space or writing is denied, the CPU 11 determines that the USB memory 203 is not writable.

When the CPU 11 determines that the USB memory 203 is not writable (S214: NO), in S215 the CPU 11 displays a write warning on the user interface 13. The process of S215 is an example of the warning process of the present disclosure. As illustrated in the example of FIG. 5B, the CPU 11 displays a warning indicating that the log cannot be stored and the MFP 1 cannot write to the USB memory 203, along with a message requesting the user to check the USB memory 203.

When the MFP 1 cannot write to the USB memory 203, the MFP 1 cannot store the log, even when the USB memory 203 is mounted in the MFP 1. By warning the user that the MFP 1 cannot write to the memory, the MFP 1 can help prevent situations in which logs cannot be stored due to a non-administrative user mounting a different memory device in the MFP 1 or changing access privileges.

After the process in S212 or S215, in S216 the CPU 11 determines that the MFP 1 is in a non-storable state. However, when the CPU 11 determines that the USB memory 203 is writable (S214: YES), in S208 the CPU 11 determines that the MFP 1 is in a storable state.

After completing the process of S207, S208, or S216, in S220 the CPU 11 determines whether to use the clock server 202 or the internal clock 17 as the source from which the current time is to be obtained. The MFP 1 can be configured in advance to use either the clock server 202 or the internal clock 17 as the source. When the CPU 11 determines to use the clock server 202 (S220: clock server), in S221 the CPU 11 determines whether the MFP 1 can communicate with the clock server 202. The clock server 202 may be an SNTP (Simple Network Time Protocol) server or an NTP (Network Time Protocol) server, for example.

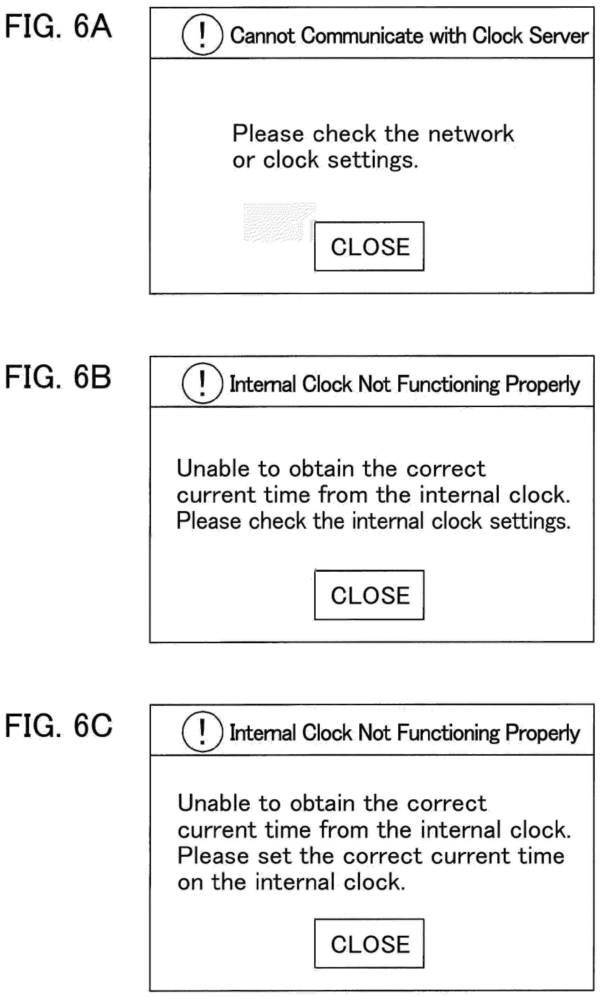

When the CPU 11 determines that the MFP 1 cannot communicate with the clock server 202 (S221: NO), in S222 the CPU 11 displays a clock server warning on the user interface 13. The process of S222 is an example of the warning process of the present disclosure. As illustrated in the example of FIG. 6A, the CPU 11 displays a warning indicating that communication with the clock server is not possible, along with a message requesting the user to check the settings related to the network interface 141 (network settings) and the settings related to clock (clock settings).

As described above, a log includes information on the time of the operation being logged. When the CPU 11 cannot obtain the current time from the clock server 202, the MFP 1 will likely not be able to include appropriate information on the time of the operation in the log. By warning the user that the MFP 1 is unable to communicate with the clock server 202, the MFP 1 can prompt corrective action when the user has inadvertently altered the communication environment. Examples of the communication environment being altered include the MFP 1 being moved outside the range of wireless communications, the power to the wireless repeater being turned off, or the LAN cable being unplugged. This corrective action can help avoid situations in which the MFP 1 is unable to obtain information on the time to be included in the log, i.e., to be stored as the log.

On the other hand, when the CPU 11 determines that the internal clock 17 is to be used (S220: internal clock) or following step S204 described above, in S224 the CPU 11 determines whether the internal clock 17 is functioning properly. Specifically, the CPU 11 attempts to obtain the current time from the internal clock 17. The process of S224 is an example of the time obtaining process of the present disclosure. When the CPU 11 cannot obtain the correct current time from the internal clock 17 (S224: NO), in S225 the CPU 11 displays a clock error warning on the user interface 13. The process of S225 is an example of the warning process of the present disclosure. As illustrated in the example of FIG. 6B, the CPU 11 displays a warning indicating that the internal clock 17 is not functioning properly and that the correct current time cannot be obtained from the internal clock 17, along with a message requesting the user to check the settings of the internal clock 17.

The CPU 11 may also reach a NO determination in S224 and display a warning when the time information for the internal clock 17 has been initialized, such as when the current time indicated by the internal clock 17 is a year and month prior to the year of manufacture. In such a case, the CPU 11 displays a warning indicating that the internal clock 17 is not functioning properly and that the correct current time cannot be obtained from the internal clock 17, along with a message requesting the user to set the correct current time on the internal clock 17, as illustrated in FIG. 6C.

When the CPU 11 cannot obtain the correct current time from the internal clock 17, it is unlikely that the MFP 1 can generate a log including information on the appropriate time of the operation. Warning the user that the correct current time cannot be obtained from the internal clock 17 can facilitate prompt recovery from situations such as battery depletion or internal clock failure.

While this description assumes that the MFP 1 can be configured to use either the clock server 202 or the internal clock 17, the MFP 1 may also be configured to use the clock server 202 when the MFP 1 is able to communicate with the clock server 202 and to check the internal clock 17 when the MFP 1 is unable to communicate with the clock server 202. In this case, the CPU 11 first performs the determination in S221 following any of steps S207, S208, and S216 and, when determining that communication with the clock server 202 is not possible (S221: NO), performs the determination in S224. Furthermore, when the CPU 11 determines that the MFP 1 is not connected to the network 100 (S202: NO), the CPU 11 advances to S224 following S204 to check whether the internal clock 17 is functioning properly. However, when the MFP 1 is configured to use the clock server 202, the CPU 11 may simply end the storage location confirmation process without executing S224 and S225.

Following S225 or when the CPU 11 determines that communication with the clock server 202 is possible (S221: YES) or when the CPU 11 can obtain the correct current time from the internal clock 17 (S224: YES), the CPU 11 ends the storage location confirmation process and returns to the startup process.

Returning to the description of the startup process in FIG. 2, in S103 the CPU 11 determines whether the determination made in the storage location confirmation process of S 102 is that the MFP 1 is in a storable state. When the CPU 11 determines that the determination result is that the MFP 1 is in a storable state (S103: YES), in S104 the CPU 11 generates a startup log and stores the startup log in the storage location. The startup log is a log indicating that the MFP 1 has been started up. When the storage location for the log is the log server 201, for example, the CPU 11 transmits the startup log to the log server 201 via the network interface 141. In this case, the process of S104 is an example of the log transmission process of the present disclosure. The startup of the MFP 1 is an event that is subject to logging. When the MFP 1 is started up, the CPU 11 determines that the conditions for storing logs have been met.

When the CPU 11 determines in S101 that the logging function is disabled, i.e., that logs are not to be stored (S101: NO), in S111 the CPU 11 determines whether a logging disabled flag is ON. When the MFP 1 is restarted after the logging function is changed from enabled to disabled, the logging disabled flag is set to ON prior to restarting. The process of setting the logging disabled flag to ON will be described later.

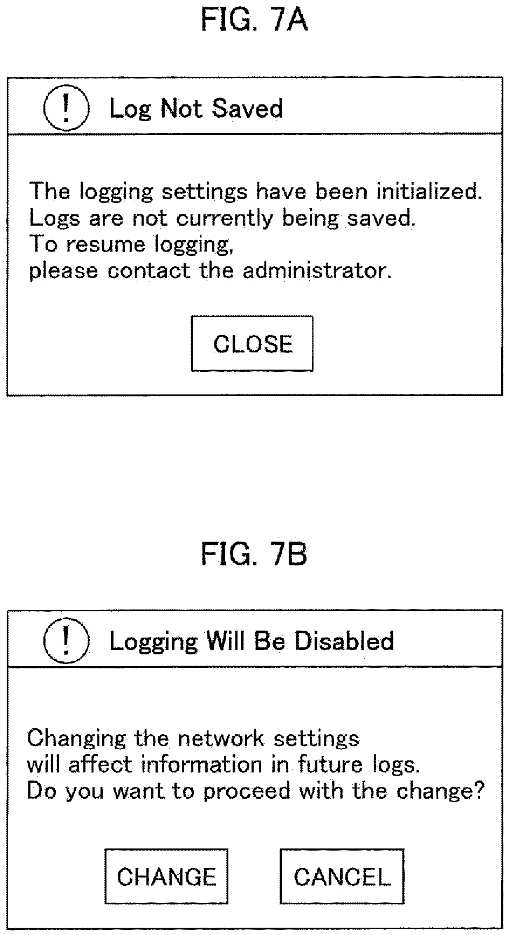

When the CPU 11 determines that the logging disabled flag is ON (S11: YES), in S112 the CPU 11 displays a logging disabled message on the user interface 13. As illustrated in the example of FIG. 7A, the CPU 11 displays a message indicating that the logging settings for storing logs have been initialized prior to the current startup and the logging function has been disabled. Note that the logging function is disabled by default when the MFP 1 is shipped from the factory. The logging function can also be disabled when a predetermined initialization is performed, for example. Following S112, in S113 the CPU 11 resets the logging disabled flag to OFF.

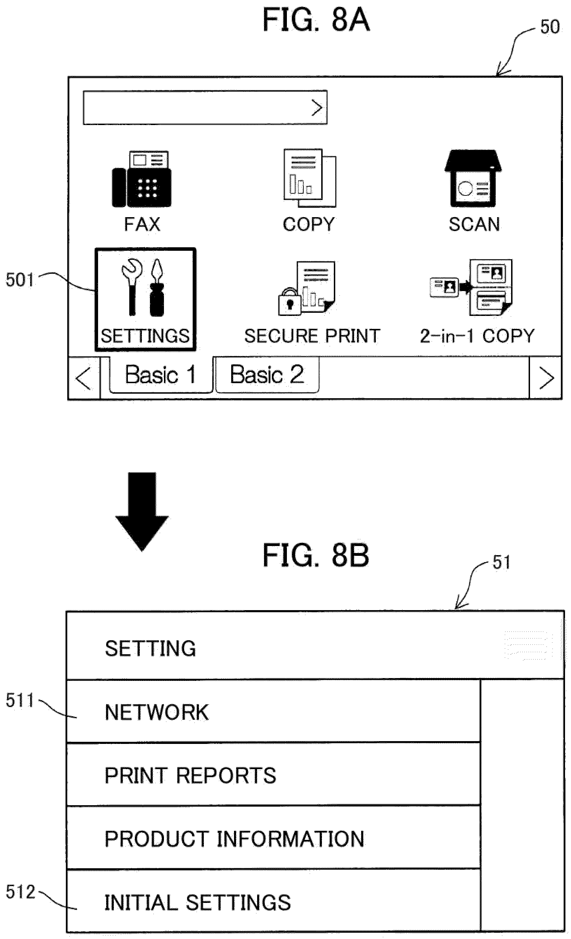

Following S104 or S113 described above or when the CPU 11 determines in S103 that the determination result from the storage location confirmation process is that the MFP 1 in a non-storable state (S103: NO) or when the logging function is disabled and the CPU 11 determines in S111 that the logging disabled flag is set to OFF (S111: NO), in S121 the CPU 11 displays a home screen on the user interface 13. As illustrated in the example of FIG. 8A, the CPU 11 displays a home screen 50 including various icons, such as FAX, Copy, Scan, and Settings icons, and can receive user operations through the home screen 50. The various icons are display areas for receiving respective execution instructions through user operations. The icons may also be called "buttons."

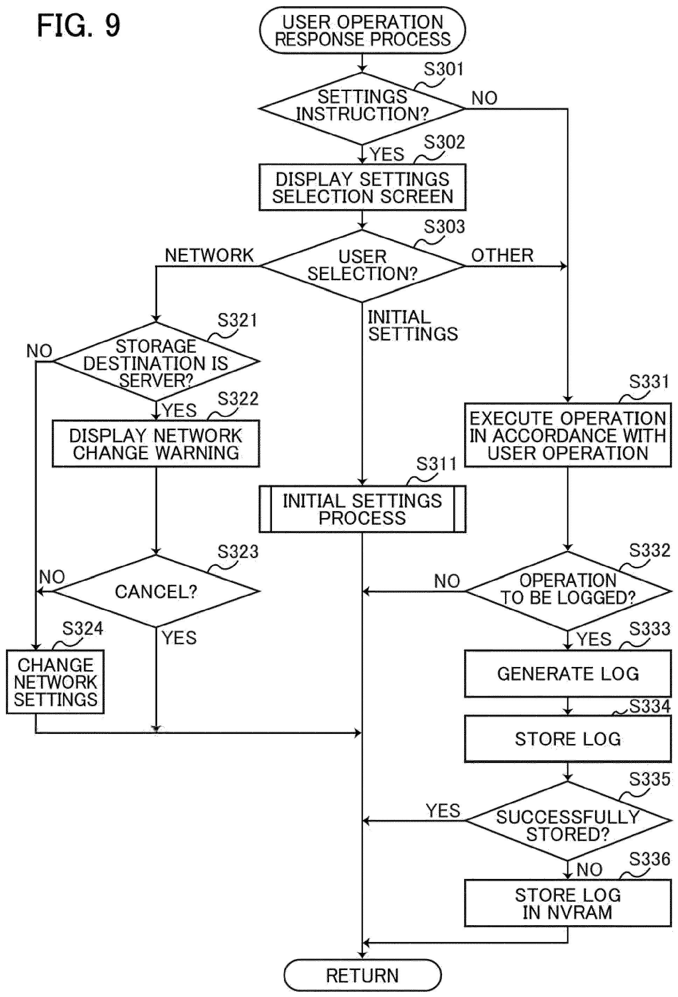

In S122 the CPU 11 determines whether a user operation has been received. When the CPU 11 determines that a user operation has been received (S122: YES), in S123 the CPU 11 determines whether the logging function is enabled. When the CPU 11 determines that the logging function is disabled and not enabled (S123: NO), in S124 the CPU 11 executes various operations in response to the user operation. The various operations may include operations for displaying a settings selection screen 51 in response to receiving a settings instruction, for receiving a selection via the settings selection screen 51, and for changing a setting in accordance with the received selection, as will be described later in S301 through S303 of FIG. 9. The changes to the settings include the processes described later in S324, S451, S503, S611, S623, and S631. When executing these processes, the CPU 11 need not keep a log based on user operations.

When the CPU 11 determines that the logging function is enabled (S123: YES), in S125 the CPU 11 executes a user operation response process. When the logging function is enabled, the CPU 11 may store a log based on user operations. Steps in the user operation response process will be described here with reference to the flowchart in FIG. 9.

In S301 of the user operation response process, the CPU 11 determines whether the user operation received through the home screen 50 is a settings instruction. For example, when the CPU 11 receives an operation on a Settings icon 501 in the home screen 50 illustrated in FIG. 8A, the CPU 11 determines that a settings instruction has been received. When the CPU 11 determines that a settings instruction has been received (S301: YES), in S302 the CPU 11 displays a settings selection screen on the user interface 13 and accepts a user selection.

As illustrated in the example of FIG. 8B, the CPU 11 displays the settings selection screen 51 and waits until the selection of an item is received. In this example, the settings selection screen 51 includes a NETWORK button 511 for receiving an instruction to begin configuring a network, and an INITIAL SETTINGS button 512 for receiving an instruction to begin an initialization process. Each of these buttons is a display area for receiving a user selection. The buttons may also be called icons.

When a user selection is received, in S303 the CPU 11 determines whether the received user selection is a selection for configuring network settings, initial settings, or something else. When the CPU 11 determines that the user has operated the INITIAL SETTINGS button 512 as an instruction to configure initial settings (S303: INITIAL SETTINGS), in S311 the CPU 11 executes an initial settings process.

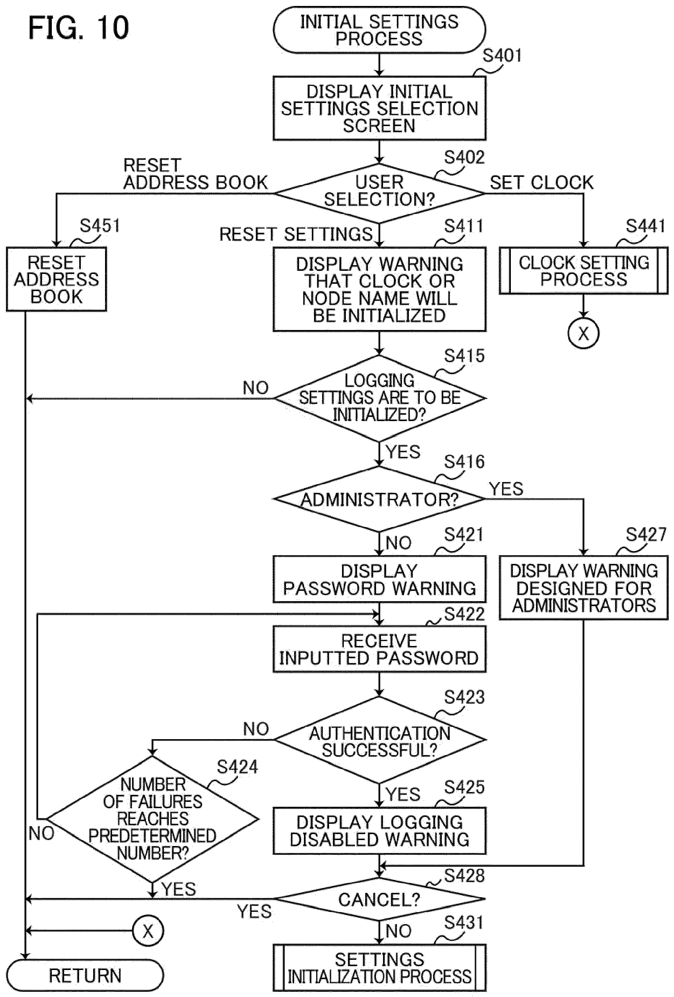

Steps in the initial settings process will be described next with reference to the flowchart in FIG. 10. In S401 of the initial settings process, the CPU 11 displays an initial settings selection screen on the user interface 13 and accepts a user selection.

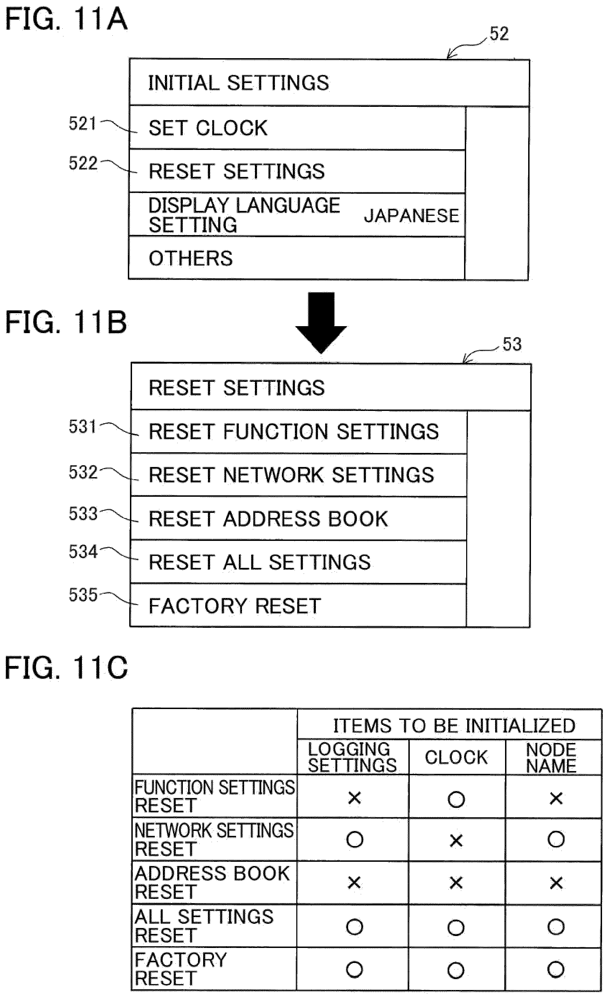

As illustrated in the example of FIG. 11A, the CPU 11 displays an initial settings selection screen 52 and receives the selection of an option through this screen. In this example, the initial settings selection screen 52 includes a SET CLOCK button 521 for configuring setting related to clock (clock settings), and a RESET SETTINGS button 522 for receiving an instruction to initialize various settings. When the RESET SETTINGS button 522 is operated in the initial settings selection screen 52, the CPU 11 displays a reset settings screen 53 on the user interface 13, as illustrated in the example of FIG. 11B, and accepts another selection.

In this example, the reset settings screen 53 includes a RESET FUNCTION SETTINGS button 531, a RESET NETWORK SETTINGS button 532, a RESET ADDRESS BOOK button 533, a RESET ALL SETTINGS button 534, and a FACTORY RESET button 535. The RESET FUNCTION SETTINGS button 531 receives an instruction to execute a function settings reset to initialize function setting items that have been changed by the user to their default values. The RESET NETWORK SETTINGS button 532 receives an instruction to execute a network settings reset to initialize network setting items. The RESET ADDRESS BOOK button 533 receives an instruction to execute an address book reset to initialize the address book information 25 stored in the memory 12. The RESET ALL SETTINGS button 534 receives an instruction to execute an all settings reset to initialize all setting items. The FACTORY RESET button 535 receives an instruction to execute a factory reset to restore all information to their factory defaults. As operation on any button in the reset settings screen 53 is an example of an initialization operation of the present disclosure.

In S402 the CPU 11 determines whether the user selection is an instruction to reset one of the various settings, an instruction to set the clock, or an instruction to reset the address book. The CPU 11 determines that the user operation is an instruction to reset one of the various settings when receiving an operation on the RESET FUNCTION SETTINGS button 531, RESET NETWORK SETTINGS button 532, RESET ALL SETTINGS button 534, or FACTORY RESET button 535 in the reset settings screen 53. When an operation on the SET CLOCK button 521 has been received through the initial settings selection screen 52, the CPU 11 determines that the operation is an instruction to set the clock. When an operation on the RESET ADDRESS BOOK button 533 has been received through the reset settings screen 53, the CPU 11 determines that the operation is an instruction to reset the address book.

When the CPU 11 determines that an instruction has been received to reset one of the various settings (S402: RESET SETTINGS), in S411 the CPU 11 issues a warning to the user that some information to be recorded (included) in the log will be reset. The process of S422 is an example of the warning process of the present disclosure.

As illustrated in the example of FIG. 11C, some items related to logging are initialized when resetting various settings in accordance with the received instruction. For example, the clock information is initialized in a function settings reset. Furthermore, the node name is initialized in a network settings reset. Furthermore, the clock and node name are initialized in an all settings reset and a factory reset. An operation on any of the RESET FUNCTION SETTINGS button 531, RESET NETWORK SETTINGS button 532, RESET ALL SETTINGS button 534, and FACTORY RESET button 535 is an example of the setting change operation of the present disclosure, an example of the initialization operation of the present disclosure, and an example of the first-type initialization operation of the present disclosure. When resetting various settings, the CPU 11 may initialize values of setting items other than the setting items described above.

The time of the operation and the node name are information included (recorded) in logs. When the clock information is initialized, the CPU 11 may not be able to save accurate times of operation. In other words, the CPU 11 may not be able to store logs including accurate times of operation. The node name is an example of identification information for identifying the MFP 1 and is information included in logs. The node name is an example of the identification information of the present disclosure and an example of the first-type identification information of the present disclosure. When the clock information and node name are initialized, the relationship between the logs generated and stored to that point and the logs generated and stored after the initialization may become unclear.

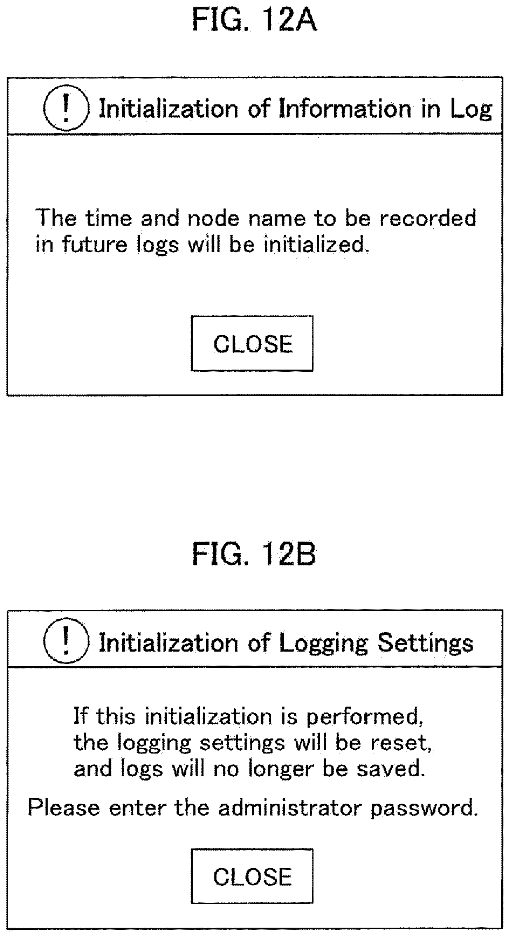

When a reset instruction to initialize the clock or node name is received, in S411 the CPU 11 displays a warning indicating that information included in logs will be initialized, along with a message specifying that information on the clock or node name will be initialized, as illustrated in the example of FIG. 12A. By warning the user that changes to the clock or node name may affect the logging function, the MFP 1 can help prevent a reduction in log reliability caused by inadvertent operations by the user, for example.

Note that the CPU 11 may confirm whether the settings for the clock and node name have been changed from their initial state before displaying the warning in S411 and may skip S411 when no changes have been made. The CPU 11 may display a message containing only those items among the clock and node name that are set to be initialized by the specified type of reset.

In S415 the CPU 11 determines whether the logging settings will be initialized. As illustrated in FIG. 11C, the logging settings are initialized when performing a network settings reset, an all settings reset, and a factory reset, after which the logging function is disabled. However, the logging settings are not initialized in a function settings reset. Thus, when the user has selected the function settings reset in S402, the CPU 11 reaches a NO determination in S415.

When the CPU 11 determines that the logging settings will be initialized (S415: YES), in S416 the CPU 11 determines whether the user logged in to the MFP 1 has administrative privileges. When the CPU 11 determines that the user is not an administrator (S416: NO), in S421 the CPU 11 displays a password warning on the user interface 13. The process of S421 is an example of the warning process of the present disclosure. As illustrated in the example of FIG. 12B, the CPU 11 displays a warning indicating that the logging settings will be initialized and that the logging function will be disabled by this initialization, along with a message informing the user that a password for administrator authentication (administrator password) is required.

After issuing the warning for initializing the logging settings, in S422 the CPU 11 displays a screen for inputting a password and accepts user input in the screen. Upon receiving an inputted password, in S423 the CPU 11 executes an authentication process on the inputted password and determines whether authentication has been successful. When the CPU 11 determines that password authentication has failed (S423: NO), in S424 the CPU 11 determines whether password authentication has failed a predetermined number of times. In other words, the CPU 11 determines whether the number of authentication failures has reached a predetermined number. When the number of authentication failures has not yet reached the predetermined number (S424: NO), the CPU 11 repeats the process in S422 to receive an inputted password and performs password authentication in S423.

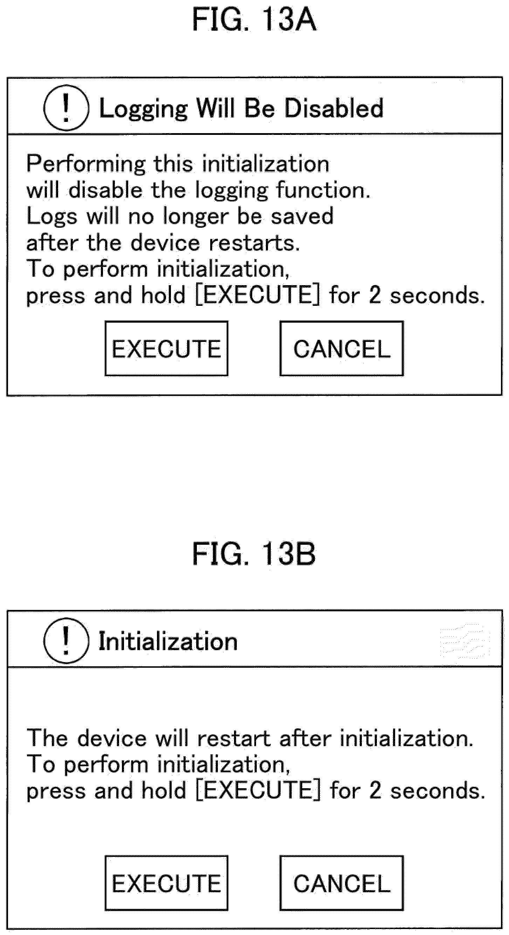

When the CPU 11 determines that the password authentication has been successful (S423: YES), in S425 the CPU 11 displays a logging disabled warning on the user interface 13 indicating that logging (log storage) will be disabled. The process of S425 is an example of the warning process of the present disclosure. As illustrated in the example of FIG. 13A, the CPU 11 displays a screen that includes a warning indicating that initialization will disable the logging function and logs will no longer be stored and accepts an instruction to execute or cancel initialization.

When a setting that affects the logging function is initialized, it may result in logs no longer being stored or in a reduction in the reliability of the information recorded (included) in the logs. When the logged-in user is not an administrator, the user may not be familiar with the impact that initialization could have on the logging function. Thus, when the logged-in user is not an administrator, the MFP 1 prompts the user to input a password, authorizes initialization when the password is successfully authenticated, and issues a further warning designed for non-administrative users. By warning the user that initialization may affect the logging function, the MFP 1 can help prevent situations in which the MFP 1 becomes unable to store logs due to an inadvertent initialization operation by a non-administrative user. Furthermore, non-administrative users can issue an initialization instruction after being made aware of the impact on the logging function.

However, when the CPU 11 determines that the logged-in user who has inputted the initialization instruction has administrative privileges (S416: YES), in S427 the CPU 11 displays a warning designed for administrators on the user interface 13. The process of S427 is an example of the warning process of the present disclosure. As illustrated in the example of FIG. 13B, the CPU 11 displays a screen that contains a message indicating that the MFP 1 will restart after initialization and accepts an instruction to execute or cancel the initialization.

When the logged-in user is an administrator, it is likely that the user is aware of how initialization affects the logging function. Thus, when the logged-in user is an administrator, the MFP 1 simplifies operations by not asking for a password, for example, but provides a warning appropriate for an administrator to avoid inadvertent initialization instructions.

As illustrated in the reset settings screen 53 in FIG. 11B, initial settings include a plurality of types of settings and the items to be initialized differ for each type. Furthermore, displayed content differs in the warnings issued for initializing the logging settings (S425, S427) and the warning issued for initializing information included in logs (S411). In other words, the CPU 11 issues warnings that include an indication of how the logging function will be affected depending on the type of operation, making it easy for the user to understand, whether the user is an administrator or a non-administrator.

In S428 the CPU 11 determines whether a cancel operation has been received in the screen displayed in S425 containing the logging disabled warning or the screen displayed in S427 containing the warning designed for administrators. When the CPU 11 determines that a cancel operation has been received (S428: YES) or when the CPU 11 determines in S424 that password authentication has failed the predetermined number of times (S424: YES) or when the CPU 11 reaches NO determination in S415 (S415: NO), the CPU 11 ends the initial settings process and returns to the user operation response process.

When password authentication has failed the predetermined number of times, the CPU 11 cancels the operation determined in S402 to have been received through the reset settings screen 53. Note that when password authentication has failed the predetermined number of times, the CPU 11 may generate a log including information indicating this event and store the log.

As described above, the CPU 11 issues a warning and accepts a cancel operation. When a cancel operation is received, the CPU 11 cancels the initial settings operation. This allows the user to avoid the effort of restoring various settings that would otherwise be initialized simply by performing a cancel operation.

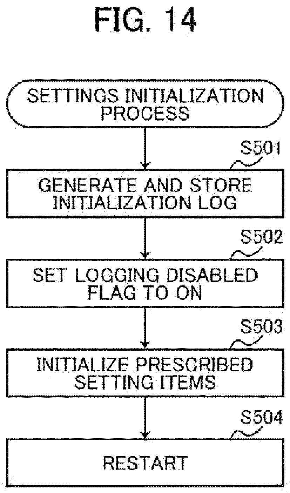

When the CPU 11 determines in S428 that a cancel operation has not been received but an instruction to execute initialization has been received (S428: NO), in S431 the CPU 11 executes a settings initialization process. Steps in the settings initialization process will be described next with reference to the flowchart in FIG. 14.

In S501 of the settings initialization process, the CPU 11 generates an initialization log and stores the initialization log in the storage location. The initialization log is a log indicating that the initialization has been performed. In S502 the CPU 11 sets the logging disabled flag to ON. As described above, the logging disabled flag is information indicating that the logging function has been changed from "enabled" to "disabled." In S503 the CPU 11 initializes predetermined setting items based on the user selection received in S402 of the initial settings process. In S504 the CPU 11 then performs a restart.

When restarting, the CPU 11 executes the same startup process described above for cases in which the power supply of the MFP 1 is turned on (see FIG. 2). In the startup process performed when restarting in S504, the CPU 11 determines in S111 that the logging disabled flag is set to ON (S111: YES) and in S112 displays a message indicating that the logging function has been disabled.

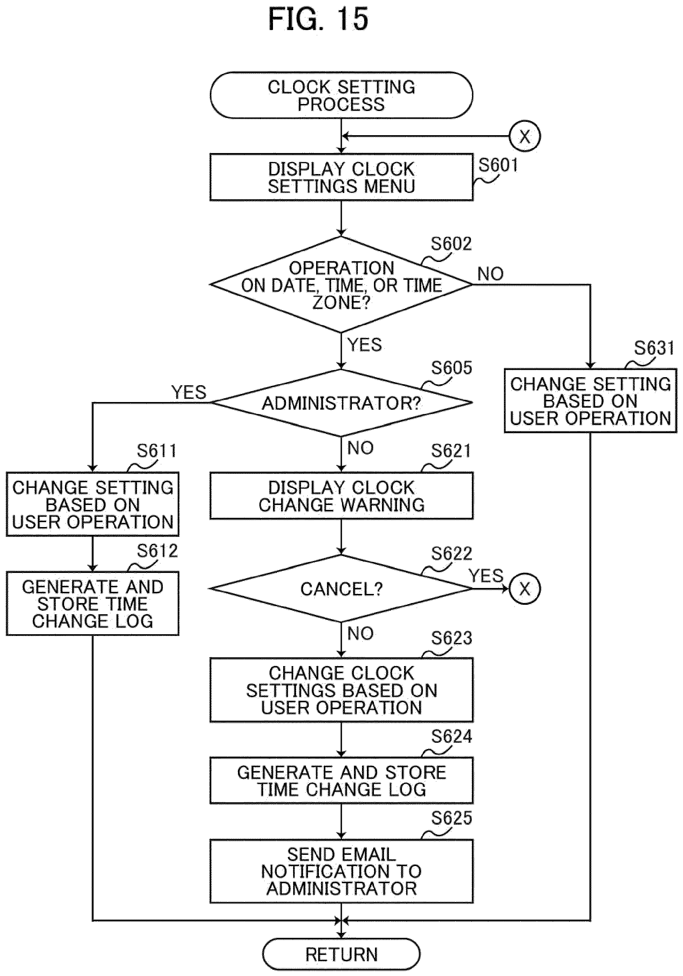

Returning to the description in FIG. 10 of the initial settings process, when the CPU 11 determines in S402 that the user selection received through the initial settings selection screen 52 is an instruction to set the clock (S402: SET CLOCK), in S441 the CPU 11 executes a clock setting process. Steps in the clock setting process will be described next with reference to the flowchart in FIG. 15.

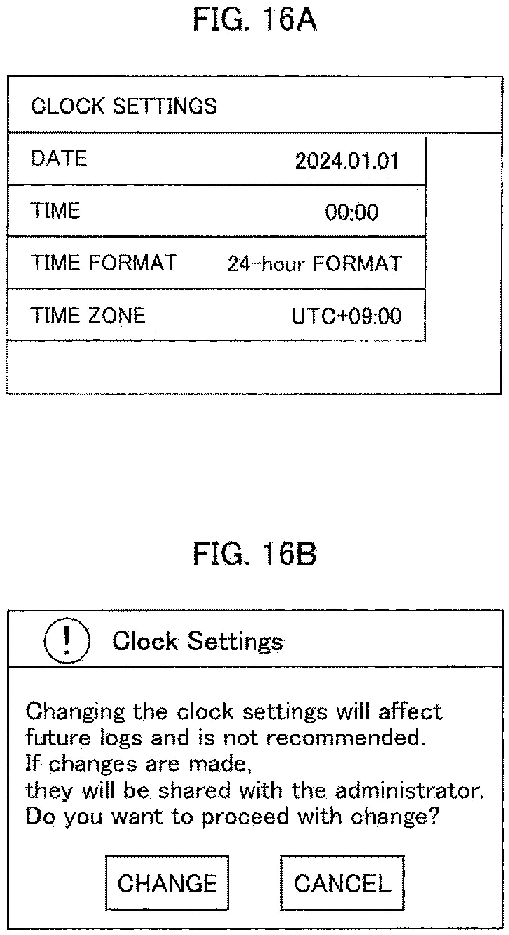

When receiving an instruction to set the clock, in S601 the CPU 11 displays a clock settings menu on the user interface 13. Specifically, when the CPU 11 receives an operation on the SET CLOCK button 521 shown in FIG. 11A, the CPU 11 displays the clock settings menu illustrated in FIG. 16A. The clock settings menu displays fields for date, time, time format, and time zone, as well as the value set for each item. Each field in the clock settings menu is a button. When a button is operated, the CPU 11 can receive an instruction to change information in the corresponding field.

In S602 the CPU 11 determines whether an operation on one of the date, time, and time zone fields has been received through the displayed clock settings menu. When one of the date, time, and time zone settings is changed, information on times of operation to be included in logs could change. An operation on one of the date, time, and time zone fields is an instruction to change a clock setting and an example of the clock change operation of the present disclosure.

When the CPU 11 determines that an operation on one of the date, time, and time zone fields has been received (S602: YES), in S605 the CPU 11 determines whether the logged-in user is an administrator. When the CPU 11 determines that the logged-in user is an administrator (S605: YES), in S611 the CPU 11 changes the corresponding setting based on the user operations. In S612 the CPU 11 generates a time change log and stores the time change log in the storage location. The time change log is a log indicating that the relevant time setting has been changed.

On the other hand, when the CPU 11 determines that the user is not an administrator (S605: NO), in S621 the CPU 11 displays a clock change warning on the user interface 13. The process of S621 is an example of the warning process of the present disclosure. As illustrated in FIG. 16B, the CPU 11 displays a screen that contains a message warning the user that changing the clock settings will affect information included in logs and accepts an instruction to proceed with the change or to cancel.

When clock settings are changed, information on times of operation included in logs generated and stored thereafter may not correspond to the logs generated and stored prior to the change of the clock settings. By warning the user that setting the clock may affect the logging function, the MFP 1 can help prevent a reduction in log reliability due to inadvertent operations by the user to change clock settings, for example.

In S622 the CPU 11 determines whether a cancel operation has been received in the screen containing the clock change warning. When the CPU 11 determines that an instruction to proceed with the change has been received instead of a cancel operation (S622: NO), in S623 the CPU 11 changes the clock settings based on the user operation. In S624 the CPU 11 generates a time change log and store the time change log in the storage location. The time change log is a log indicating that the relevant time setting has been changed. Steps S623 and S624 are identical to S611 and S612 described above. In S625 the CPU 11 also notifies the administrator via email that the clock settings have been changed. In this way, the administrator can be made aware that the clock settings have been changed and can recognize that the current time information may not correspond between existing logs that have been already stored and logs generated after this change.

When the CPU 11 determines in S622 that a cancel operation has been received (S622: YES), the CPU 11 returns to S601 and redisplays the clock settings menu. Furthermore, when the CPU 11 determines in S602 that an operation on the time format field has been received through the clock settings menu (S602: NO), in S631 the CPU 11 changes the setting for the time format based on the user operation. Since the setting for the time format does not affect information included in logs, the CPU 11 changes this setting based on the user operation without issuing a warning or requiring confirmation. Note that when the logging function is not enabled, the CPU 11 may allow anyone to change any or all items in the clock settings menu and may simply notify the administrator of the change.

Following any of steps S612, S625, and S631, the CPU 11 ends the clock setting process and returns to the initial settings process of FIG. 10. After completing the clock settings process of S441 in the initial settings process, the CPU 11 ends the initial settings process and returns to the user operation response process in FIG. 9.

On the other hand, when the CPU 11 determines in S402 of the initial settings process in FIG. 10 that an instruction to execute an address book reset has been received through the reset settings screen 53 (see FIG. 11B; S402: RESET ADDRESS BOOK), in S451 the CPU 11 executes an address book reset to reset, i.e., clear, the address book information 25. Following S451, the CPU 11 ends the initial settings process and returns to the user operation response process in FIG. 9.

In addition to information on telephone numbers and fax numbers for each contact, the address book information 25 includes sender identification information that the MFP 1 adds when sending a facsimile or email in order to identify the MFP 1 as the source of transmission, for example. The sender identification information is an example of the second-type identification information of the present disclosure. The operation on the RESET ADDRESS BOOK button 533 is an example of the second-type initialization operation of the present disclosure and the second-type identification change operation of the present disclosure.

When an instruction to execute an address book reset is received, the CPU 11 performs operations based on the received instruction without issuing a warning or requiring confirmation since the address book information 25 is not included in logs and does not affect the logging function or the information included in logs. The preference in the present embodiment is not to issue a warning for an initialization that does not change settings affecting the logging function.

Returning to the description of the user operation response process in FIG. 9, when the CPU 11 has completed the initial settings process of S311 without restarting, the CPU 11 ends the user operation response process and returns to the startup process in FIG. 2. After completing the user operation response process of S125 in the startup process or following the operation of S124, the CPU 11 returns to S121, displays the home screen, and accepts another user operation. The CPU 11 may also display various screens other than the home screen in response to user operations.

Returning to the user operation response process in FIG. 9, when the CPU 11 determines in S303 that an operation on the NETWORK button 511 has been received through the settings selection screen 51 displayed in S302 (see FIG. 8B; S303: NETWORK), in S321 the CPU 11 determines whether the log storage location is the log server 201. Specifically, when an operation on the NETWORK button 511 is received, the CPU 11 displays a screen for receiving instructions to change various network settings, and accepts user operations.

Some examples of instructions to change network settings that the CPU 11 can receive are instructions to change the node name, the IP address obtaining method, the IP address, and settings related to wireless communication (wireless communication settings). When the IP address or wireless communication settings are changed, the MFP 1 may be unable to connect to the log server 201.

When the CPU 11 determines that the log storage location is the log server 201 (S321: YES), in S322 the CPU 11 displays a network change warning on the user interface 13. As illustrated in the example of FIG. 7B, the CPU 11 displays a screen containing a warning indicating that logs can no longer be stored (logging can no longer be performed) when the network settings are changed and accepts an instruction to proceed with the change or to cancel.

The node name is information included in logs. Thus, when the node name is changed, the relationship between the logs generated and stored after the change and the existing (already stored) logs may become unclear. The node name is an example of the identification information of the present disclosure and the first-type identification information of the present disclosure. Therefore, the CPU 11 displays the network change warning in S322 even when receiving an instruction to change the node name. In this case, the process of S322 is an example of the warning process of the present disclosure. The operation to issue an instruction to change the node name is an example of the identification change operation of the present disclosure and an example of the first-type identification change operation of the present disclosure. The IP address may also be information included in logs. In such cases, the CPU 11 displays the network change warning in S322 when receiving an instruction to change the IP address. In this case, the IP address is an example of the identification information of the present disclosure and the first-type identification information of the present disclosure.

In S323 the CPU 11 determines whether a cancel operation has been received in the screen containing the network change warning displayed in S322. When the CPU 11 determines that an instruction to proceed with the change has been received and not a cancel operation (S323: NO) or when the CPU 11 determines in S321 that the log storage location is not the log server 201 (S321: NO), in S324 the CPU 11 changes the network settings based on the user operations. Following S324 or when the CPU 11 determines in S323 that a cancel operation has been received (S323: YES), the CPU 11 ends the user operation response process and returns to the startup process in FIG. 2.

When an operation on an icon other than the Settings icon 501 is received via the home screen 50 (see FIG. 8A) displayed in S121 of the startup process, in S301 of the user operation response process the CPU 11 determines that an instruction other than a settings instruction has been received (S301: NO). When the CPU 11 determines that an instruction other than a settings instruction has been received (S301: NO) or when the CPU 11 determines in S303 that the user selection received through the settings selection screen 51 (see FIG. 8B) is neither a selection for configuring network settings nor a selection for configuring initial settings (S303: OTHER), in S331 the CPU 11 executes operations in accordance with the user operation. In S332 the CPU 11 then determines whether the operation performed in S331 is an operation to be logged. The types of operation to be logged are determined in advance.

When the CPU 11 determines that the operation performed in S331 is an operation to be logged (S332: YES), in S333 the CPU 11 collects information to be included in a log corresponding to the operation and generates the log in accordance with the logging program 22. In other words, when the user-executed operation is an operation to be logged, the CPU 11 determines that the conditions for storing a log have been met. In S334 the CPU 11 stores the log generated in S333 in the storage location. When the storage location for the log is the log server 201, the CPU 11 transmits the generated log to the log server 201 via the network interface 141. In this case, the process of S334 is an example of the log transmission process of the present disclosure.

Note that when the storage location for the log is the USB memory 203, in S334 the CPU 11 writes the log generated in S333 to the USB memory 203 via the USB interface 142. In this case, the process of S334 is an example of the log storage process of the present disclosure.

In S335 the CPU 11 determines whether the log has successfully been stored. When the CPU 11 determines that the storing operation has failed (S335: NO), in S336 the CPU 11 stores the log in a nonvolatile storage area of the memory 12 (e.g., NVRAM). Following the process of S336 or when the CPU 11 determines in S335 that the log has been stored successfully (S335: YES) or when the CPU 11 determines in S332 that the user-executed operation is not an operation to be logged (S332: NO), the CPU 11 ends the user operation response process and returns to the startup process in FIG. 2.

In the startup process in FIG. 2, when the CPU 11 has not received a user operation after displaying the home screen 50 in S121 (S122: NO), in S131 the CPU 11 determines whether a periodic timing has arrived. The periodic timing is a predetermined interval, such as every minute.

When the CPU 11 determines that the periodic timing has arrived (S131: YES), in S132 the CPU 11 determines whether the logging function is enabled. When the CPU 11 determines that the periodic timing has not arrived (S131: NO) or that the logging function is not enabled (S132: NO), the CPU 11 repeats the process from S122 and waits until a user operation is received or the periodic timing has arrived.

When the CPU 11 determines that the periodic timing has arrived (S131: YES) and that the logging function is enabled (S132: YES), in S133 the CPU 11 executes the same storage location confirmation process performed in S102. The storage location confirmation process is the process illustrated in FIG. 3 for checking whether the MFP 1 is properly connected to the log storage location. In other words, the CPU 11 periodically checks the connection with the log storage location when the logging function is enabled.

When the logging function is enabled on startup, in the storage location confirmation process of S133 the CPU 11 may check whether the MFP 1 is connected to the network 100 (S202) or whether the USB memory 203 is mounted in the MFP 1 (S211) but need not attempt to access the log server 201 (S205) or attempt to write to the USB memory 203 (S214) since the storage location confirmation process has already been executed in S102. In other words, the CPU 11 may execute only steps S201 through S203 and S211 through S212 when executing the storage location confirmation process at the periodic timings.

Furthermore, when the CPU 11 detects in the periodically executed step S133 that the MFP 1 cannot connect to the log storage location after determining in S102 upon startup that the MFP 1 can connect, the CPU 11 may display a warning message with different content from that in the storage location confirmation process of S102. As a specific example, the CPU 11 may display a message indicating that the MFP 1 has been disconnected from the network 100 or that the USB memory 203 has been removed. Furthermore, when the log storage location is the USB memory 203 and the CPU 11 detects after startup that the USB memory 203 has been removed, the CPU 11 may issue a warning at that time rather than being limited to the periodic timings.

When a log cannot be stored due to a connection error with the log server 201 or insufficient memory in the USB memory 203, the CPU 11 temporarily stores the log in NVRAM in the MFP 1, as described above. Then after a restart or at periodic intervals, for example, the CPU 11 reattempts to store the log for which storing operation has failed. This action ensures that a log is not immediately lost even when the MFP 1 is unable to communicate with the log server 201, for example. However, it is preferable to avoid a condition in which logs cannot be stored since older logs will eventually be overwritten by new logs when the NVRAM becomes full. By periodically executing the storage location confirmation process, the MFP 1 can warn the user when logs cannot be stored. This measure can be expected to shorten the duration of a condition in which logs cannot be stored.

As described above, the MFP 1 according to the present embodiment has a logging function to store logs on the log server 201 via the network interface 141. However, the MFP 1 may be unable to store logs when communication with the log server 201 becomes impossible due to a setting related to the network interface 141 being changed. Thus, when the MFP 1 receives an instruction that would change settings related to the network interface 141 while the logging function to store logs on the log server 201 is enabled, such as an instruction to change the network settings or any of various instructions for initialization, the MFP 1 issues a warning to the user through the user interface 13. By warning the user that changing a setting will affect the logging function to store logs on the log server 201, the MFP 1 can avoid situations in which logs can no longer be stored due to the user inadvertently performing a setting change operation that changes a setting.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below:

For example, the image-processing device of the present invention is not limited to an MFP, which is used as an example in the above embodiment. The present invention may also be applied to a printer, scanner, or fax machine, for example, provided that the device has at least network communication and image-processing functions. Furthermore, the internal clock 17 may be eliminated.

The display formats for the various screens described in the above embodiment are just examples. For example, the wording of messages and the layout of buttons displayed in the screens are not limited to the examples in the drawings. The method of issuing warnings is also not limited to screen displays on the user interface 13 but may be audio output or a combination of screen displays and audio output. The MFP 1 also need not accept cancellations.

The MFP 1 may also have programs and data for implementing the functions of an embedded web server (hereinafter abbreviated as "EWS"), for example, and may be capable of receiving various operations via the EWS. For example, the MFP 1 may be able to receive initialization instructions and instructions to change network settings via the EWS. In this case, the MFP 1 may display warning screens through the EWS. Operation screens provided by the EWS are an example of the user interface of the present disclosure.

Although the CPU 11 is configured to generate and store a startup log in S104 of the startup process in the embodiment described above, the CPU 11 does not need to generate and store a startup log.

In the above embodiment, the MFP 1 executes the storage location confirmation process on startup and periodically thereafter, but the present disclosure is not limited to this configuration. For example, the MFP 1 may execute the storage location confirmation process when conditions for storing a log have been met or when a confirmation instruction is received from the user.

In the above embodiment, the MFP 1 requests the user to input a password when the user inputting an initialization instruction is not an administrator, but the MFP 1 may be configured not to request a password. Even non-administrative users can be expected to proceed cautiously when warned how initialization will affect logs. Furthermore, the CPU 11 is configured to display a more simplified warning designed for administrators (S427 in the initial settings process) than the warning designed for non-administrators when the user inputting an initialization instruction is an administrator. However, the CPU 11 may display a similar warning for administrators to indicate that logging (log storage) will be disabled by the initialization.

In any of the flowcharts disclosed in the above embodiment, the plurality of processes that make up any of the plurality of steps may be executed in parallel, or the order in which the processes are performed may be modified in any way that does not produce any inconsistencies in the processes.

The processes disclosed in the above embodiment may be executed by a single CPU, a plurality of CPUs, an ASIC or other hardware, or a combination of these components. Furthermore, the processes disclosed in the embodiment may be achieved through a storage medium that stores the programs used to implement those processes or according to any of various other methods or formats.

The present disclosure encompasses the following aspects:
(1) According to aspect (1), the present disclosure provides an image-processing device. The image-processing device includes: a network interface; a user interface; and a controller. The image-processing device has a server logging function to store a log on a server connected to the image-processing device via the network interface. The controller is configured to perform: a log transmission process; and a warning process. The log transmission process is performed when a first condition for storing a log is met while the server logging function is enabled. The log transmission process includes: generating; and transmitting. The generating included in the log transmission process generates a log. The transmitting included in the log transmission process transmits, to the server, the log generated by the generating included in the log transmission process via the network interface. The warning process includes: issuing. The issuing included in the warning process issues a warning related to the server logging function via the user interface.
(2) According to aspect (2), in the image-processing device of aspect (1), it is preferable that: in response to a setting change operation being received via the user interface while the server logging function is enabled, the warning process is performed and the warning indicates that changing a setting related to the network interface is to affect the server logging function; and the setting change operation instructs to change the setting related to the network interface.
(3) According to aspect (3), in the image processing device of aspect (2), it is preferable that: the warning process further includes: receiving. The receiving included in the warning process receives a cancellation operation via the user interface. The cancellation operation instructs to cancel the setting change operation that has been received. It is also preferable that: the controller is configured to further perform: a cancellation process. The cancellation process is performed in response to the warning process receiving the cancellation operation. The cancellation process includes: cancelling. The cancelling included in the cancellation process cancels the received setting change operation.
(4) According to aspect (4), in the image-processing device of aspect (1), it is preferable that: the controller is configured to further perform: a network determination process; and the network determination process includes: determining. The determining included in the network determination process determines whether the image-processing device is connected to a network via the network interface. It is also preferable that: in response to the network determination process determining that the image-processing device is not connected to the network while the server logging function is enabled, the warning process is performed and the warning indicates that the image-processing device is not connected to the network.
(5) According to aspect (5), in the image-processing device of aspect (4), it is preferable that: the controller is configured to further perform: a server determination process. The server determination process is performed in response to the network determination process determining that the image-processing device is connected to the network. The server determination process includes: determining. The determining included in the server determination process determines whether the server is accessible. It is also preferable that: in response to the server determination process determining that the server is not accessible while the server logging function is enabled, the warning process is performed and the waning indicates that the server is not accessible.
(6) According to aspect (6), in the image-processing device of aspect (1), it is preferable that: a removable portable memory device is mountable in the image-processing device; and the image-processing device further has a memory logging function to store a log in the memory device mounted in the image-processing device. It is also preferable that the controller is configured to further perform: a log storage process. The log storage process is performed when a second condition for storing a log is met while the memory logging function is enabled. The log storage process includes: generating; and storing. The generating included in the log storage process generates a log. The storing included in the log storage process stores, in the mounted memory device, the log generated by the generating included in the log storage process. It is also preferable that: in response to detection that no memory device is mounted in the image-processing device while the memory logging function is enabled, the warning process is performed and the warning indicates that no memory device is mounted.
(7) According to aspect (7), in the image-processing device of aspect (6), it is preferable that: the controller is configured to further perform: a write determination process. The write determination process is performed when the memory device is mounted in the image-processing device. The write determination process includes: determining. The determining included in the write determination process determines whether the mounted memory device is writable. It is also preferable that: in response to the write determination process determining that the mounted memory device is not writable while the memory logging function is enabled, the warning process is performed and the warning indicates that the mounted memory device is not writable.
(8) According to aspect (8), in the image-processing device of aspect (1), it is preferable that: in response to an initialization operation being received via the user interface while the server logging function is enabled, the warning process is performed and the warning indicates that initialization is to affect the server logging function; and the initialization operation instructs to initialize a setting in the image-processing device.
(9) According to aspect (9), in the image-processing device of aspect (8), it is preferable that: the warning process further includes: receiving. The receiving included in the warning process receives a cancellation operation via the user interface. The cancellation operation instructs to cancel the initialization operation that has been received. It is also preferable that: the controller is configured to further perform: a cancellation process. The cancellation process is performed in response to the warning process receiving the cancellation operation. The cancellation process includes: cancelling. The cancelling included in the cancellation process cancels the received initialization operation.
(10) According to aspect (10), in the image-processing device of aspect (8), it is preferable that: while the server logging function is enabled: when the initialization operation that has been received is a first-type initialization operation, the warning process is performed; and when the initialization operation that has been received is a second-type initialization operation, the warning process is not performed. It is also preferable that: the first-type initialization operation instructs to initialize one or more settings including one or more of a plurality of specific settings in the image-processing device and the second-type initialization operation instructs to initialize one or more settings including none of the plurality of specific settings in the image-processing device; and each of the plurality of specific setting, when changed, affects the server logging function.
(11) According to aspect (11), in the image-processing device of aspect (10), it is preferable that: the warning indicates warning content corresponding to the one or more of the plurality of specific settings.
(12) According to aspect (12), in the image-processing device of aspect (11), it is preferable that: the warning content incudes an indication of how the server logging function is to be affected.
(13) According to aspect (13), in the image-processing device of aspect (8), it is preferable that: warning content indicated by the warning varies depending on whether a logged-in user logged in to the image-processing device has an administrative privilege.
(14) According to aspect (14), in the image-processing device of aspect (13), it is preferable that: the warning process further includes: receiving; permitting; and cancelling. The receiving included in the warning process receives, when the logged-in user does not have the administrative privilege, an input of a password for administrator authentication via the user interface. The permitting included in the warning process permits, in response to the administrator authentication being successful, initialization based on the initialization operation. The cancelling included in the warning process cancels, in response to the administrator authentication failing, the initialization operation.
(15) According to aspect (15), in the image-processing device of aspect (1), it is preferable that: the generating included in the log transmission process generates a log including information on a time. It is also preferable that: in response to a clock change operation being received via the user interface while the server logging function is enabled, the warning process is performed and the warning indicates that changing a setting related to a clock is to affect the server logging function; and the clock change operation instructs to change the setting related to the clock.
(16) According to aspect (16), in the image-processing device of aspect (15), it is preferable that: the controller is configured to further perform: a clock server determination process. The clock server determination process includes: determining. The determining included in the clock server determination process determines whether communication with a clock server via the network interface is possible. It is also preferable that: in response to the clock server determination process determining that the communication with the clock server is not possible while the server logging function is enabled, the warning process is performed and the warning indicates that the communication with the clock server is not possible.
(17) According to aspect (17), it is preferable that: the image-processing device of aspect (15) further includes: an internal clock; and the internal clock is powered by a battery. In the image-processing device of aspect (15), it is also preferable that: the controller is configured to further perform: a time obtaining process. The time obtaining process includes: attempting. The attempting included in the time obtaining process attempts to obtain a current time from the internal clock. It is also preferable that: in response to the time obtaining process failing to obtain a correct current time while the server logging function is enabled, the warning process is performed and the warning indicates that the correct current time cannot be obtained.
(18) According to aspect (18), in the image-processing device of aspect (1), it is preferable that: the generating included in the log transmission process generates a log including identification information for identifying the image-processing device. It is also preferable that: in response to an identification change operation being received via the user interface while the server logging function is enabled, the warning process is performed and the warning indicates that changing a setting related to the identification information is to affect the server logging function; and the identification change operation instructs to change the setting related to the identification information.
(19) According to aspect (19), in the image-processing device of aspect (18), it is preferable that: while the server logging function is enabled: when the identification change operation that has been received is a first-type identification change operation, the warning process is performed; and when the identification change operation that has been received is a second-type identification change operation, the warning process is not performed. It is also preferable that: the first-type identification change operation instructs to change first-type identification information and the second-type identification change operation instructs to change second-type identification information; and the log generated by the generating included in the log transmission process includes the first-type identification information and not includes the second-type identification information.
(20) According to aspect (20), the present disclosure also provides an image-processing device. The image processing device includes: a network interface; a user interface; and a controller. The image-processing device has a server logging function to store a log on a server connected to the image-processing device via the network interface. The controller is configured to perform: a log transmission process; a network determination process; and a warning process. The log transmission process is performed when a condition for storing a log is met while the server logging function is enabled. The log transmission process includes: generating; and transmitting. The generating included in the log transmission process generates a log. The transmitting included in the log transmission process transmits the generated log to the server via the network interface. The network determination process includes: determining. The determining included in the network determination process determines whether the image-processing device is connected to a network via the network interface. The warning process is performed in response to the network determination process determining that the image-processing device is not connected to the network while the server logging function is enabled. The warning process includes: issuing. The issuing included in the warning process issues a warning via the user interface. The warning indicates that the image-processing device is not connected to the network.
(21) According to aspect (21), the present disclosure also provides an image-processing device. The image-processing device includes: a user interface; and a controller. A removable portable memory device is mountable in the image-processing device. The image-processing device has a memory logging function to store a log in the memory device mounted in the image-processing device. The controller is configured to perform: a log storage process; and a warning process. The log storage process is performed when a condition for storing a log is met while the memory logging function is enabled. The log storage process includes: generating; and storing. The generating included in the log storage process generates a log. The storing included in the log storage process stores the generated log in the mounted memory device. The warning process is performed in response to detection that no memory device is mounted in the image-processing device while the memory logging function is enabled. The warning process includes: issuing. The issuing included in the warning process issues a warning via the user interface. The warning indicates that no memory device is mounted.
(22) According to aspect (22), the present disclosure also provides an image-processing device. The image-processing device includes: a network interface; a user interface; and a controller. The image-processing device has a server logging function to store a log on a server connected to the image-processing device via the network interface. The controller is configured to perform: a log transmission process; and a warning process. The log transmission process is performed when a condition for storing a log is met while the server logging function is enabled. The log transmission process includes: generating; and transmitting. The generating included in the log transmission process generates a log. The transmitting included in the log transmission process transmits the generated log to the server via the network interface. The warning process is performed in response to an initialization operation being received via the user interface while the server logging function is enabled. The initialization operation instructs to initialize a setting in the image-processing device. The warning process includes: issuing. The issuing included in the warning process issues a warning via the user interface. The warning indicates that initialization is to affect the server logging function.
(23) According to aspect (23), in the image-processing device of aspect (22), it is preferable that: the warning process further includes: receiving. The receiving included in the warning process receives a cancellation operation via the user interface. The cancellation operation instructs to cancel the initialization operation that has been received. It is also preferable that: the controller is configured to further perform: a cancellation operation. The cancellation process is performed in response to the warning process receiving the cancellation operation. The cancellation process includes: cancelling. The cancelling include in the cancellation process cancels the received initialization operation.
(24) According to aspect (24), the present disclosure further provides an image-processing device. The image-processing device includes: a network interface; a user interface; and a controller. The image-processing device has a server logging function to store a log on a server connected to the image-processing device via the network interface. The controller is configured to perform: a log transmission process; and a warning process. The log transmission process is performed when a condition for storing a log is met while the server logging function is enabled. The log transmission process includes: generating; and transmitting. The generating included in the log transmission process generates a log including information on a time. The transmitting included in the log transmission process transmits the generated log to the server via the network interface. The warning process is performed in response to a clock change operation being received via the user interface while the server logging function is enabled. The clock change operation instructs to change a setting related to a clock. The warning process includes: issuing. The issuing included in the warning process issues a warning via the user interface. The warning indicates that changing the setting related to the clock is to affect the server logging function.
(25) According to aspect (25), the present disclosure further provides an image-processing device. The image-processing device includes: a network interface; a user interface; and a controller. The image-processing device has a server logging function to store a log on a server connected to the image-processing device via the network interface. The controller is configured to perform: a log transmission process; a clock server determination process; and a warning process. The log transmission process is performed when a condition for storing a log is met while the server logging function is enabled. The log transmission process includes: generating; and transmitting. The generating included in the log transmission process generates a log including information on a time. The transmitting included in the log transmission process transmits the generated log to the server via the network interface. the clock server determination process includes: determining. The determining included in the clock server determination process determines whether communication with a clock server via the network interface is possible. The warning process is performed in response to the clock server determination process determining that the communication with the clock server is not possible while the server logging function is enabled. The warning process includes: issuing. The issuing included in the waning process issues a warning via the user interface. The warning indicates that the communication with the clock server is not possible.
(26) According to aspect (26), the present disclosure further provides an image-processing device. The image-processing device includes: a network interface; a user interface; an internal clock; and a controller. The internal clock is powered by a battery. The image-processing device has a server logging function to store a log on a server connected to the image-processing device via the network interface. The controller is configured to perform: a log transmission process; a time obtaining process; and a warning process. The log transmission process is performed when a condition for storing a log is met while the server logging function is enabled. The log transmission process includes: generating; and transmitting. The generating included in the log transmission process generates a log including information on a time. The transmitting included in the log transmission process transmits the generated log to the server via the network interface. The time obtaining process includes attempting. The attempting included in the time obtaining process attempts to obtain a current time from the internal clock. The warning process is performed in response to the time obtaining process failing to obtain a correct current time while the server logging function is enabled. The warning process includes: issuing. The issuing included in the warning process issues a warning via the user interface. The warning indicate that the correct current time cannot be obtained.
(27) According to aspect (27), the present disclosure further provides an image-processing device. The image-processing device includes: a network interface; a use interface; and a controller. The image-processing device has a server logging function to store a log on a server connected to the image-processing device via the network interface. The controller is configured to perform: a log transmission process; and a warning process. The log transmission process is performed when a condition for storing a log is met while the server logging function is enabled. The log transmission process includes: generating; and transmitting. The generating included in the log transmission process generates a log including identification information identifying the image-processing device. The transmitting included in the log transmission process transmits the generated log to the server via the network interface. The warning process is performed in response to an identification change operation being received via the user interface while the server logging function is enabled. The identification change operation instructing to change a setting related to the identification information. The warning process includes: issuing. The issuing included in the warning process issues a warning via the user interface. The warning indicates that changing the setting related to the identification information is to affect the server logging function.

## Claims

1. An image-processing device comprising:
a network interface;
a user interface; and
a controller,
wherein the image-processing device has a server logging function to store a log on a server connected to the image-processing device via the network interface,
wherein the controller is configured to perform:
a log transmission process when a first condition for storing a log is met while the server logging function is enabled, the log transmission process including:
generating a log; and
transmitting, to the server, the log generated by the generating included in the log transmission process via the network interface; and
a warning process including:
issuing a warning related to the server logging function via the user interface.

2. The image-processing device according to claim 1,
wherein, in response to a setting change operation being received via the user interface while the server logging function is enabled, the warning process is performed and the warning indicates that changing a setting related to the network interface is to affect the server logging function, the setting change operation instructing to change the setting related to the network interface.

3. The image-processing device according to claim 2,
wherein the warning process further includes:
receiving a cancellation operation via the user interface, the cancellation operation instructing to cancel the setting change operation that has been received, and
wherein the controller is configured to further perform:
a cancellation process in response to the warning process receiving the cancellation operation, the cancellation process including:
cancelling the received setting change operation.

4. The image-processing device according to claim 1,
wherein the controller is configured to further perform:
a network determination process including:
determining whether the image-processing device is connected to a network via the network interface,
wherein, in response to the network determination process determining that the image-processing device is not connected to the network while the server logging function is enabled, the warning process is performed and the warning indicates that the image-processing device is not connected to the network, and
optionally:
wherein the controller is configured to further perform:
a server determination process in response to the network determination process determining that the image-processing device is connected to the network, the server determination process including:
determining whether the server is accessible, and
wherein, in response to the server determination process determining that the server is not accessible while the server logging function is enabled, the warning process is performed and the warning indicates that the server is not accessible.

5. The image-processing device according to claim 1,
wherein a removable portable memory device is mountable in the image-processing device,
wherein the image-processing device further has a memory logging function to store a log in the memory device mounted in the image-processing device,
wherein the controller is configured to further perform:
a log storage process when a second condition for storing a log is met while the memory logging function is enabled, the log storage process including:
generating a log; and
storing, in the mounted memory device, the log generated by the generating included in the log storage process, and
wherein, in response to detection that no memory device is mounted in the image-processing device while the memory logging function is enabled, the warning process is performed and the warning indicates that no memory device is mounted, and
optionally:
wherein the controller is configured to further perform:
a write determination process when the memory device is mounted in the image-processing device, the write determination process including:
determining whether the mounted memory device is writable, and
wherein, in response to the write determination process determining that the mounted memory device is not writable while the memory logging function is enabled, the warning process is performed and the warning indicates that the mounted memory device is not writable.

6. The image-processing device according to claim 1,
wherein, in response to an initialization operation being received via the user interface while the server logging function is enabled, the warning process is performed and the warning indicates that initialization is to affect the server logging function, the initialization operation instructing to initialize a setting in the image-processing device, and
optionally:
wherein the warning process further includes:
receiving a cancellation operation via the user interface, the cancellation operation instructing to cancel the initialization operation that has been received, and
wherein the controller is configured to further perform:
a cancellation process in response to the warning process receiving the cancellation operation, the cancellation process including:
cancelling the received initialization operation.

7. The image-processing device according to claim 6,
wherein while the server logging function is enabled:
when the initialization operation that has been received is a first-type initialization operation, the warning process is performed; and
when the initialization operation that has been received is a second-type initialization operation, the warning process is not performed, and
wherein the first-type initialization operation instructs to initialize one or more settings including one or more of a plurality of specific settings in the image-processing device and the second-type initialization operation instructs to initialize one or more settings including none of the plurality of specific settings in the image-processing device, each of the plurality of specific settings, when changed, affecting the server logging function.

8. The image-processing device according to claim 7,
wherein the warning indicates warning content corresponding to the one or more of the plurality of specific settings, and
optionally wherein the warning content includes an indication of how the server logging function is to be affected.

9. The image-processing device according to claim 6,
wherein warning content indicated by the warning varies depending on whether a logged-in user logged in to the image-processing device has an administrative privilege.

10. The image-processing device according to claim 9,
wherein the warning process further includes:
receiving, when the logged-in user does not have the administrative privilege, an input of a password for administrator authentication via the user interface;
permitting, in response to the administrator authentication being successful, initialization based on the initialization operation; and
cancelling, in response to the administrator authentication failing, the initialization operation.

11. The image-processing device according to claim 1,
wherein the generating included in the log transmission process generates a log including information on a time, and
wherein, in response to a clock change operation being received via the user interface while the server logging function is enabled, the warning process is performed and the warning indicates that changing a setting related to a clock is to affect the server logging function, the clock change operation instructing to change the setting related to the clock.

12. The image-processing device according to claim 11,
wherein the controller is configured to further perform:
a clock server determination process including:
determining whether communication with a clock server via the network interface is possible, and
wherein, in response to the clock server determination process determining that the communication with the clock server is not possible while the server logging function is enabled, the warning process is performed and the warning indicates that the communication with the clock server is not possible.

13. The image-processing device according to claim 11, further comprising:
an internal clock powered by a battery,
wherein the controller is configured to further perform:
a time obtaining process including:
attempting to obtain a current time from the internal clock, and
wherein, in response to the time obtaining process failing to obtain a correct current time while the server logging function is enabled, the warning process is performed and the warning indicates that the correct current time cannot be obtained.

14. The image-processing device according to claim 1,
wherein the generating included in the log transmission process generates a log including identification information for identifying the image-processing device,
wherein, in response to an identification change operation being received via the user interface while the server logging function is enabled, the warning process is performed and the warning indicates that changing a setting related to the identification information is to affect the server logging function, the identification change operation instructing to change the setting related to the identification information.

15. The image-processing device according to claim 14,
wherein while the server logging function is enabled:
when the identification change operation that has been received is a first-type identification change operation, the warning process is performed; and
when the identification change operation that has been received is a second-type identification change operation, the warning process is not performed, and
wherein the first-type identification change operation instructs to change first-type identification information and the second-type identification change operation instructs to change second-type identification information, the log generated by the generating included in the log transmission process including the first-type identification information and not including the second-type identification information.
